# EUROPÄISCHE PATENTSCHRIFT

(11) **EP 2 807 395 B1**
(45) Veröffentlichungstag und Bekanntmachung des Hinweises auf die Patenterteilung: **23.03.2016**
(21) Anmeldenummer: 12816641.0
(22) Anmeldetag: 13.12.2012
(51) Int. Cl.: A47B 88/04, F16F 7/06, F16F 9/12, F16F 7/04

(54) **VORRICHTUNG ZUR DÄMPFUNG DER BEWEGUNG EINES BEWEGLICH GELAGERTEN BAUTEILS**
DEVICE FOR DAMPING THE MOVEMENT OF A MOVABLY MOUNTED COMPONENT
DISPOSITIF D'AMORTISSEMENT DU MOUVEMENT D'UN ÉLÉMENT STRUCTURAL MONTÉ MOBILE

(30) Priorität: 25.01.2012 AT 832012
(43) Veröffentlichungstag der Anmeldung: 03.12.2014
(73) Patentinhaber: FULTERER Gesellschaft mbH, 6890 Lustenau (AT)
(72) Erfinder: MÜLLER, Wolfgang, A-6890 Lustenau (AT); GRÜBEL, Edwin, CH-9443 Widnau (CH)
(74) Vertreter: Hofmann, Ralf U.
(86) Internationale Anmeldenummer: PCT/AT2012/000315
(87) Internationale Veröffentlichungsnummer: WO 2013/110100

(56) Entgegenhaltungen:
- EP-A1- 0 593 810
- DE-A1- 19 615 433
- DE-A1-102006 022 563
- DE-A1-102006 051 688
- DE-C- 654 017
- US-B1- 7 032 985

## Beschreibung

Die Erfindung bezieht sich auf ein Vorrichtung zur Dämpfung der Bewegung eines beweglich gelagerten Bauteils, umfassend eine Bremsvorrichtung, die mindestens eine um eine Achse der Bremsvorrichtung drehbare, durch die Bewegung des Bauteils angetriebene Dämpferfläche aufweist, die mit mindestens einer festgehaltenen Dämpferfläche mindestens einen Spalt einschließt, in welchem sich ein viskoses Dämpfungsmedium befindet, welches beim Verdrehen der mindestens einen angetriebenen Dämpferfläche gegenüber der mindestens einen festgehaltenen Dämpferfläche eine die Drehung der mindestens einen angetriebenen Dämpferfläche um ihre Achse bremsende Bremskraft der Bremsvorrichtung hervorruft, wobei die von der Bremsvorrichtung ausgeübte Bremskraft von der Drehgeschwindigkeit der mindestens einen angetriebenen Dämpferfläche abhängt.

Dämpfungsvorrichtungen, wie sie beispielsweise zur Dämpfung von beweglich gelagerten Möbelteilen, wie Schubladen, eingesetzt werden, sind in unterschiedlichen Ausführungsformen bekannt. So sind beispielsweise Kolben-Zylinder-Einheiten bekannt, bei denen im Kolben und/oder zwischen dem Kolben und dem Zylinder zumindest eine Durchströmöffnung für ein durchströmendes Fluid, beispielsweise eine Hydraulikflüssigkeit, vorgesehen ist. Derartige Dämpfer gehen beispielsweise aus der DE 20 2005 020 820 U1 und DE 10 213 726 A1 hervor. Bekannt sind weiter Rotationsdämpfer, bei denen in einem Spalt zwischen einem feststehenden Dämpferteil und einem drehbar gelagerten Dämpferteil ein hochviskoses Dämpfungsmedium angeordnet ist. Die Bremskraft wird von diesem auf Scherung belasteten Dämpfungsmedium hervorgerufen. Dämpfer dieser Art gehen beispielsweise aus der DE 10 210 917 C1, US 5,277,282 A, JP 59222631 A und US 5,143,432 A hervor.

Vorteilhaft bei diesen vorbekannten pneumatischen, hydraulischen und Scherreibungsdämpfern ist es, dass die hervorgerufene Bremskraft von der Bewegungsgeschwindigkeit des zu dämpfenden Bauteils abhängt, so dass ein sich schneller bewegendes Bauteil stärker gedämpft wird, was in vielen Anwendungsfällen gewünscht ist. Nachteilig sind die bezogen auf die Baugröße relativ geringen erzielbaren Bremskräfte (insbesondere bei rein pneumatisch wirkenden Dämpfern und Scherreibungsdämpfern), die erforderlichen Abdichtungen (insbesondere bei hydraulischen Dämpfern) und die relativ hohen Reibungskräfte, die bei niedrigen Geschwindigkeiten der Betätigung des Dämpfers zu überwinden sind. Es sind dies Reibungskräfte, die unabhängig von der Bremswirkung des Dämpfermediums wirken (=Leerreibung).

Weiters ist der Einsatz von rein mechanisch wirkenden Reibungsdämpfern bekannt. So gehen beispielsweise aus der DE 19 938 626 A1, der DE 201 16197 U1 und der JP 01266331 A Umschlingungsteile hervor, die ein innen liegendes Reibteil umgeben und mit diesem eine Reibpaarung ausbilden. Reibungsdämpfer haben den Nachteil, dass die von Ihnen ausgeübte Bremskraft grundsätzlich geschwindigkeitsunabhängig ist.

Aus der DE 10 313 659 B3, DE 10 214 596 A1, DE 19 717 937 A1, AT 503 877 B1 und EP 1 260 159 A2 gehen Kolben-Zylinder-Einheiten hervor, bei denen eine zwischen den beiden Kolbenseiten sich ausbildende Luftdruckdifferenz auf ein elastisch verformbares Kolbenteil wirkt, welches in Abhängigkeit von der Druckdifferenz mehr oder weniger stark an die Zylinderinnenseite angedrückt wird. Die zwischen dem elastischen Kolbenteil und der Zylinderinnenwand wirkende Reibkraft hängt also von der Druckdifferenz und somit von der Geschwindigkeit der Bewegung des zu dämpfenden Bauteils ab. Es werden damit lineare Dämpfer bereitgestellt, bei denen eine mechanisch wirkende Bremsvorrichtung mit einer pneumatisch wirkenden Bremsvor-richtung gekoppelt wird, welche die Bremskraft der mechanisch wirkenden Bremsvorrichtung steuert. Nachteilig bei diesen vorbekannten Dämpfern ist es u.a., dass sich zuerst eine Druckdifferenz aufbauen muss, bis die Bremskraft des Reibungsdämpfers einsetzt, was mit einer mehr oder weniger großen Zeitverzögerung des Einsetzens der Dämpfungswirkung verbunden ist. Auch ist die Dämpfungscharakteristik für viele Anwendungen unvorteilhaft bzw. lässt sich nur schwer an verschiedene Anwendungen anpassen. Ein linearer Dämpfer ist auch auf eine begrenzte Betätigungsstrecke eingeschränkt bzw. es müssen die Abmessungen eines linearen Dämpfers der gewünschten Betätigungsstrecke entsprechen.

Eine Vorrichtung mit zwei miteinander gekoppelten Bremsvorrichtungen, die als Fahrzeugstoßdämpfer ausgebildet ist, geht aus der DE 601 293 C hervor. Ein flexibel ausgebildetes Umschlingungsteil liegt reibend an einer Reibungstrommel an. Ein Ende des Umschlingungsteils ist mit der zu dämpfenden Fahrzeugachse verbunden. Das andere Ende des Umschlingungsteils steht mit einer hydraulischen Dämpfvorrichtung in Verbindung. Diese ist innerhalb der Reibtrommel angeordnet und umfasst Flügel, die drehbar gelagert sind und in einer Kammer angeordnet sind, welche eine Flüssigkeit enthält. Durch Löcher in den Flügeln kann die Flüssigkeit von einer Seite auf die andere Seite des Flügels übertreten. Alternativ können die Löcher auch in Kammerwandungen angeordnet sein, die zwei Kammern miteinander verbinden. Die Reibungskraft des rotatorischen Reibdämpfers wird damit vom hydraulischen Dämpfer gesteuert, sodass dadurch eine insgesamt geschwindigkeitsabhängige Bremskennlinie erreicht wird. Nachteilig bei dieser Vorrichtung ist es, dass diese eine relativ große Baugröße aufweist. Auch müssen auf Grund der in der Flüssigkeit auftretenden hohen Drücke hochwertige Abdichtungen vorhanden sein. Solche Abdichtungen verursachen auch Reibung, sodass die Leichtgängigkeit bei geringen Bewegungsgeschwindigkeiten eingeschränkt ist (=erhöhte Leerreibung).

Aus der DE 196 15 433 A1 geht ein Rotationsdämpfer hervor, bei dem ein Rotor und ein Schaft in mit einer viskosen Flüssigkeit gefüllten Kammern angeordnet sind. In Abhängigkeit vom Drehwinkel ist der Rotor an den Schaft angekoppelt bzw. von diesem abgekoppelt. Wenn sich der Rotor zusammen mit dem Schaft in der viskosen Flüssigkeit dreht, ist die Bremskraft höher als wenn sich der Schaft nur alleine in der viskosen Flüssigkeit dreht.

Die DE 654017 C zeigt einen Stoßdämpfer, der wechselweise angeordnete angetriebene und festgehaltene Lamellen aufweist. In die eine Drehrichtung werden die Lamellen zusammengedrückt, sodass eine Bremskraft hervorgerufen wird, während in die andere Drehrichtung das Zusammendrücken der Lamellen aufgehoben wird.

Aus der DE 10 2006 022 563 A1 geht ein Rotationsdämpfer mit schräg zur Längsachse eines Rotors verkippten Rotorblättern hervor, die sich in einem viskosen Dämpfungsmedium drehen, wodurch auch eine axiale Kraftkomponente erzeugt wird. Zusätzlich sind Reibflächen vorhanden, welche in einer Ausführungsform durch die erzeugte axiale Kraftkomponente bei einer ausreichend hohen Drehgeschwindigkeit des Rotors zusammengedrückt werden, um eine zusätzliche Dämpfungskraft zu erzeugen. In einer anderen Ausführungsform ist eine Trägheitskupplung vorhanden, die die zusätzlichen Reibflächen beschleunigungsabhängig zusammendrückt.

Die DE 10 2006 051 688 A1 zeigt einen Rotationsdämpfer, bei dem auf dem Außengewinde einer gedrehten Achse, von der sich ein Teil in einem viskosen Dämfpungsmedium befindet, ein durch die Drehung der Achse axial verschiebbarer Schieber angeordnet ist. Ab einem bestimmten Drehwinkel der Achse kommt es durch eine auf dem Schieber angeordnete Reibfläche zu einer zusätzlichen Bremswirkung.

Wie erwähnt werden Dämpfungsvorrichtungen häufig zum Dämpfen der Einfahrbewegung von ausziehbaren Möbelteilen, wie Schubladen und ausziehbaren Hochschränken, eingesetzt. Diese ausziehbaren Möbelteile sind dann üblicherweise auch mit einer Selbsteinzugsvorrichtung ausgestattet. Diese zieht das ausziehbare Möbelteil über einen letzten Abschnitt der Einfahrstrecke in dessen geschlossenen Zustand ein, wobei die Einfahrbewegung durch die Dämpfungsvorrichtung gedämpft ist. Selbsteinzugsvorrichtungen sind in unterschiedlichen Ausführungsformen bekannt geworden. Bei einer herkömmlichen Ausführungsform ist ein federbeaufschlagter Kippschieber vorgesehen, der mit einem am ausziehbaren Möbelteil angebrachten Mitnehmer zusammenwirkt und vom Mitnehmer zwischen einer Basisstellung und einer Wartestellung verstellt wird, welche der Kippschieber im ausgezogenen Zustand des ausziehbaren Möbelteils einnimmt. Ein Beispiel für eine solche Selbsteinzugsvorrichtung, hier in Kombination mit einer Ausziehsperreinrichtung, geht aus der EP 1 500 763 A2 hervor. Aus der GB 1 117 071 geht eine Zuhaltevorrichtung hervor, bei der ein federbeaufschlagter Fangarm um eine Achse verschwenkbar gelagert ist und vom Mitnehmer zwischen der Basisstellung und der Wartestellung um diese Achse verschwenkt wird. Die Feder wird hierbei über einen Totpunkt bewegt.

Wenn mehrere ausziehbare Möbelteile vorhanden sind, die nur wechselweise ausziehbar sein sollen, beispielsweise mehrere übereinander angeordnete Schubladen, so werden Ausziehsperrvorrichtungen eingesetzt. Auch eine Zentralverriegelung kann über solche Ausziehsperrvorrichtungen verwirklicht werden. In einer häufigen Ausbildungsform sind Sperrstangen vorhanden, die nur einen begrenzten Freiraum für ihre Verschiebung aufweisen. Für jedes ausziehbare Möbelteil ist ein Betätigungsteil vorgesehen, welches mit mindestens einer der Sperrstangen zusammenwirkt. Beim Ausziehen eines der ausziehbaren Möbelteile wird mindestens eine der Sperrstangen verschoben, so dass der Freiraum für die Verschiebung der Sperrstangen aufgebraucht ist und ein weiteres ausziehbares Möbelteil somit nicht gleichzeitig ausgezogen werden kann. Eine derartige Ausziehsperrvorrichtung geht beispielsweise aus der bereits erwähnten EP 1 500 763 A2 hervor. Aus der GB 2 376 043 A geht eine Ausziehsperrvorrichtung hervor, bei der die Betätigungsteile um Achsen verschwenkt werden, die parallel zur Längserstreckung der Sperrstangen liegen und mit den Sperrstangen zusammenwirkende Nocken aufweisen.

Ausziehsperrvorrichtungen mit Sperrstangen sind in unterschiedlichen weiteren Ausführungsformen bekannt. Beispielsweise die DE 29 620 152 U1, EP 1 336 709 A1 und WO 2008/107499 A1 zeigen eine Betätigung der Sperrstangen durch Betätigungsteile, welche um eine rechtwinkelig zu den Sperrstangen liegende Achse beim Ausziehen des jeweiligen ausziehbaren Möbelteils verschwenkt werden. Beispielsweise aus der GB 2 376 043 A geht eine Ausziehsperrvorrichtung hervor, bei der die Betätigungsteile um Achsen verschwenkt werden, die parallel zur Längserstreckung der Sperrstangen liegen und mit den Sperrstangen zusammenwirkende Nocken aufweisen.

Aufgabe der Erfindung ist es eine Dämpfungsvorrichtung der eingangs genannten Art bereitzustellen, die eine geschwindigkeitsabhängige Bremskraft aufweist, wobei eine kompakte Ausbildung der Vorrichtung ermöglicht wird und bei geringen Bewegungsgeschwindigkeiten des zu dämpfenden Bauteils die zu überwindende Reibung der Vorrichtung gering gehalten werden soll. Erfindungsgemäß gelingt dies durch eine Vorrichtung mit den Merkmalen des Anspruchs 1.

Bei der Vorrichtung gemäß der Erfindung ist zusätzlich zur Bremsvorrichtung, bei der eine Bremskraft durch ein in mindestens einem Spalt angeordnetes viskoses Dämpfungsmedium ausübbar ist, eine Zusatz-Bremsvorrichtung vorhanden, von der ebenfalls eine Bremskraft ausübbar ist. Zudem umfasst die Vorrichtung eine Kupplung zum An- und Abkuppeln der Zusatz-Bremsvorrichtung. Im geschlossenen Zustand der Kupplung wird durch die Bewegung des Bauteils mindestens eine um eine Achse der Zusatz-Bremsvorrichtung drehbare Zusatz-Dämpferfläche der Zusatz-Bremsvorrichtung um die Achse der Zusatz-Bremsvorrichtung angetrieben. Dabei übt die Zusatz-Bremsvorrichtung eine Zusatz-Bremskraft aus. Im geöffneten Zustand der Kupplung ist die mindestens eine Zusatz-Dämpferfläche von der Bewegung des Bauteils abgekuppelt, also nicht angetrieben, und die Zusatz-Bremsvorrichtung ist inaktiv, übt also keine Bremskraft auf das Bauteil aus. Das Schließen und Öffnen der Kupplung erfolgt in Abhängigkeit von der Drehgeschwindigkeit der mindestens einen angetriebenen Dämpferfläche der Bremsvorrichtung um die Achse der Bremsvorrichtung, wobei die Betätigung der Kupplung durch die von der Bremsvorrichtung ausgeübte Bremskraft selbsttätig erfolgt. Die Kupplung ist bei einer unter einem Schwellenwert liegenden Drehgeschwindigkeit der mindestens einen angetriebenen Dämpferfläche geöffnet und bei einer über dem Schwellenwert liegenden Drehgeschwindigkeit der mindestens einen angetriebenen Dämpferfläche geschlossen. Die Drehgeschwindigkeit der mindestens einen angetriebenen Dämpferfläche hängt von der Geschwindigkeit bzw. Drehgeschwindigkeit der Bewegung des beweglich gelagerten Bauteils ab, sodass somit also die Zusatz-Bremsvorrichtung bei höheren Bewegungsgeschwindigkeiten des Bauteils zugeschaltet wird. Es kann somit bei höheren Geschwindigkeiten eine Vergrößerung der insgesamt von der Vorrichtung ausgeübten Bremskraft erreicht werden, welche die von der Geschwindigkeit abhängende Vergrößerung der von der Bremsvorrichtung ausgeübten Bremskraft übersteigt.

Durch die Erfindung kann ein kompakter, kostengünstiger Dämpfer mit einer vorteilhaften Bremscharakteristik bereitgestellt werden, wobei die Höhe der Bremskraft von der Geschwindigkeit des zu dämpfenden Bauteils abhängt. Eine geringe Leerreibung kann erreicht werden. Da die Bremsvorrichtung und Zusatz-Bremsvorrichtung in Form von Rotationsdämpfern ausgebildet sind, kann gegebenenfalls eine Dämpfung über einen prinzipiell unbegrenzten Weg erreicht werden.

Falls die Bremsvorrichtung mehr als eine angetriebene Dämpferfläche umfasst, sind diese vorzugweise alle um die gleiche Achse drehbar (also koaxial). Falls die Zusatz-Bremsvorrichtung mehr als eine angetriebene Zusatz-Dämpferfläche umfasst, sind diese vorzugsweise alle um die gleiche Achse drehbar (also koaxial).

Vorteilhafterweise fällt die Achse der Bremsvorrichtung, um die die mindestens eine angetriebene Dämpferfläche der Bremsvorrichtung drehbar ist, mit der Achse der Zusatz-Bremsvorrichtung zusammen (=stimmt mit dieser überein), um die die mindestens eine angetriebene Zusatz-Dämpferfläche der Zusatz-Bremsvorrichtung zumindest im geschlossenen Zustand der Kupplung drehbar ist, d.h. die mindestens eine angetriebene Dämpferfläche der Bremsvorrichtung und die mindestens eine angetriebene Zusatz-Dämpferfläche der Zusatz-Bremsvorrichtung sind also um die gleiche Achse drehbar bzw. koaxial. Es wird dadurch eine einfache, kompakte Ausbildung erreicht.

In einer vorteilhaften Ausführungsform der Erfindung schließt die mindestens eine angetriebene Zusatz-Dämpferfläche der Zusatz-Bremsvorrichtung mit der mindestens einen festgehaltenen Zusatz-Dämpferfläche mindestens einen Spalt ein, in welchem sich ein viskoses Dämpfungsmedium befindet, welches beim Verdrehen der mindestens einen angetriebenen Zusatz-Dämpferfläche gegenüber der mindestens einen festgehaltenen Zusatz-Dämpferfläche eine die Drehung der mindestens einen angetriebenen Zusatz-Dämpferfläche um ihre Achse bremsende Bremskraft der Zusatz-Bremsvorrichtung hervorruft. Die Bremskraft der Zusatz-Bremsvorrichtung hängt damit von der Drehgeschwindigkeit der mindestens einen angetriebenen Zusatz-Dämpferfläche ab.

In einer anderen möglichen Ausführungsform könnte die Zusatz-Bremsvorrichtung auch rein mechanisch ausgebildet sein und mindestens eine Reibpaarung aufweisen, bei der zur Erzeugung einer Bremskraft eine angetriebene Reibfläche gegenüber einer an ihr anliegenden festgehaltenen Reibfläche um eine Achse der Zusatz-Bremsvorrichtung verdrehbar ist. Günstigerweise könnte eine Geschwindigkeitsabhängigkeit der von der Zusatz-Bremsvorrichtung ausgeübten Bremskraft dadurch bewirkt werden, dass die Reibflächen mindestens einer der Reibpaarungen in Abhängigkeit von der von der Bremsvorrichtung ausgeübten Bremskraft, also in Abhängigkeit von der Bewegungsgeschwindigkeit des Bauteils, mehr oder weniger stark aneinander angedrückt werden. Ein Vorteil einer solchen mechanisch wirkenden Bremsvorrichtung besteht darin, dass bei einer kompakten Bauweise eine hohe Reibkraft erreichbar ist.

Bei einer Ausbildung der Zusatz-Bremsvorrichtung mit einem in mindestens einem Spalt angeordneten viskosen Dämpfungsmedium, welches eine Bremskraft hervorruft, bestehen demgegenüber Vorteile darin, dass der bei mechanischen Bremsen auftretende Verschleiß durch Reibung entfällt und dass Betriebsgeräusche, die bei mechanischen Bremsen auftreten können (wie Rattern oder Quietschen) vermieden werden können. Außerdem ist die Bremskraft einer solchen Zusatz-Bremsvorrichtung geschwindigkeitsabhängig.

Auch eine Kombination einer mechanisch wirkenden Bremsvorrichtung mit einer in einem Spalt angeordneten, auf Scherung belasteten Dämpfungsmedium aufweisenden Bremsvorrichtung könnte grundsätzlich vorgesehen sein.

Die Viskosität des im mindestens einen Spalt der Bremsvorrichtung und gegebenenfalls im mindestens einen Spalt der Zusatz-Bremsvorrichtung angeordneten viskosen Dämpfungsmediums beträgt mehr als 20.000 Pa s, vorzugweise mehr als 50.000 Pa s, wobei Werte im Bereich von 100.000 bis 1.000.000 Pa s besonders bevorzugt sind.

Die Spaltbreite des Spalts bzw. mindestens eines der Spalte, vorzugsweise aller Spalte, in dem bzw. in denen das Dämpfungsmedium der Bremsvorrichtung und gegebenenfalls der Zusatz-Bremsvorrichtung angeordnet ist, liegt im Bereich von 0,1mm bis 0,5mm, d.h. das Dämpfungsmedium weist eine solche Schichtdicke auf.

Die Dämpfungskraft wird vom im mindestens einen Spalt der Bremsvorrichtung und gegebenenfalls im mindestens einen Spalt der Zusatz-Bremsvorrichtung angeordneten Dämpfungsmedium welches den Spalt bzw. jeweiligen Spalt vorteilhafterweise vollständig ausfüllt, dadurch hervorgerufen, dass dieses auf Scherung belastet wird. Der das Dämpfungsmedium aufweisende Spalt bzw. diese Spalte erstrecken sich vorzugsweise ringförmig um die Achse der Bremsvorrichtung.

Zum Zurückhalten des Dämpfungsmediums im Spalt bzw. im jeweiligen Spalt der Bremsvorrichtung und gegebenenfalls der Zusatz-Bremsvorrichtung können, wenn überhaupt, relativ einfach ausgebildete Dichtungen eingesetzt werden. Bei nicht fließfähigen Fetten können Dichtungen gegebenenfalls ganz entfallen. Bei fließfähigen Ölen sind Dichtungen, die ein Auslaufen des Öls verhindern, erforderlich, wobei auf die Dichtungen keine hohen Drücke wirken.

In einer vorteilhaften Ausführungsform der Erfindung umfasst die Kupplung ein flexibel, vorzugsweise elastisch biegbar, ausgebildetes Umschlingungsteil. Das Umschlingungsteil umgibt ein Ankuppelteil über einen Teil seines Umfangs, der zumindest mehr als 90°, vorzugsweise mindestens 180°, besonders bevorzugt mindestens 250° beträgt. Vorzugsweise erstreckt sich das Umschlingungsteil über höchstens 500°, besonders bevorzugt über weniger als 360° um das Ankuppelteil herum. Das Umschlingungsteil ist direkt oder indirekt mit einer Dämpferhülse der Bremsvorrichtung verbunden, die mindestens eine der Dämpferflächen der Bremsvorrichtung aufweist.

Bei einer über dem Schwellenwert liegenden Drehgeschwindigkeit der mindestens einen angetriebenen Dämpferfläche der Bremsvorrichtung kommt es zu einer drehfesten Verbindung des Umschlingungsteils mit dem Ankuppelteil, während bei einer unter dem Schwellenwert liegenden Drehgeschwindigkeit der mindestens einen angetriebenen Dämpferfläche der Bremsvorrichtung die beiden Teile gegeneinander verdrehbar sind.

Günstigerweise fällt die Achse, um die das Umschlingungsteil und das Ankuppelteil im geöffneten Zustand der Kupplung gegeneinander verdrehbar sind mit der Achse der Bremsvorrichtung und/oder mit der Achse der Zusatz-Bremsvorrichtung zusammen.

Die drehfeste Verbindung zwischen dem Umschlingungsteil und dem Ankuppelteil im geschlossenen Zustand der Kupplung kann durch Reibschluss und/oder Formschluss erfolgen.

Zum selbsttätigen Schließen und Öffnen der Kupplung ist günstigerweise ein hinteres Ende des Umschlingungsteils direkt oder indirekt mit der Dämpferhülse verbunden, welche eine von der Bremsvorrichtung hervorgerufene Bremskraft auf das Umschlingungsteil überträgt, wobei die Dämpferhülse ein inneres Bremsteil umgibt und die Dämpferhülse und das innere Bremsteil gegeneinander verdrehbar sind. Die Bezeichnung "hinteres Ende" bezieht sich auf die Relativbewegung zwischen dem Umschlingungsteil und dem inneren Bremsteil oder zwischen dem Umschlingungsteil und dem Ankuppelteil im geöffneten Zustand der Kupplung. Hierbei kann entweder das Umschlingungsteil vom zu dämpfenden Bauteil angetrieben sein und sich gegenüber dem feststehenden innen Bremsteil bzw. dem im geöffneten Zustand der Kupplung feststehenden Ankuppelteil in eine Drehrichtung drehen oder es kann das innere Bremsteil angetrieben sein und sich gegenüber dem Umschlingungsteil in eine entgegengesetzte Drehrichtung drehen, wobei sich im geöffneten Zustand der Kupplung das Ankuppelteil mit dem inneren Bremsteil mitdreht.

Eine erfindungsgemäße Vorrichtung eignet sich zur Dämpfung unterschiedlicher Arten von beweglich gelagerten Bauteilen, mit anderen Worten zur Ausübung einer Bremskraft auf unterschiedliche Arten von beweglich gelagerten Bauteilen. So kann die Bewegung eines linear beweglich gelagerten Bauteils, z.B. eines linear beweglich gelagerten Möbelteils, wie einer Schublade oder eines Schrankauszugs, oder die Bewegung eines drehbar gelagerten Bauteils, z.B. einer Türe oder einer Klappe in Form eines Möbelteils oder als Teil in oder an einem Fahrzeug gedämpft werden. Unterschiedliche andere Arten von linear oder drehbar beweglich gelagerten Teilen, wie Maschinenteilen, können durch eine erfindungsgemäße Vorrichtung ebenfalls gedämpft werden.

Durch eine erfindungsgemäße Vorrichtung, bei der in Abhängigkeit von der von der Bremsvorrichtung ausgeübten Bremskraft eine kaskadenartige Zuschaltung von mindestens einer Zusatz-Bremsvorrichtung erfolgt, können hohe Dämpfungskräfte aufgebracht werden, sodass die Vorrichtung beispielsweise zur Dämpfung der Einschubbewegung von Schwerlastauszügen eingesetzt werden kann. Bei Schwerlastauszügen sind ausziehbare Möbelteile vorgesehen, von denen eines, mehrere oder alle mit mehr als 150kg beladbar sind.

Weitere Vorteile und Einzelheiten der Erfindung werden im Folgenden anhand der beiliegenden Zeichnung erläutert. In dieser zeigen:
Fig. 1 eine Schrägsicht von erfindungsgemäßen Vorrichtungen gemäß einer vorteilhaften Ausführungsform im Einsatz zur Dämpfung der Einschubbewegung von ausziehbaren Möbelteilen;
Fig. 2 eine Schrägsicht einer der Vorrichtungen von Fig. 1, in der im ausgezogenen Zustand des ausziehbaren Möbelteils eingenommenen Wartestellung des Fangarms, mit einer Befestigungsschiene;
Fig. 3 eine Schrägsicht entsprechend Fig. 2 im Zustand, der im eingefahrenen Zustand des ausziehbaren Möbelteils vorliegt;
Fig. 4 eine Schrägsicht entsprechend Fig. 3 aber aus einem anderen Blickwinkel;
Fig. 5 eine Ansicht der an der Schiene befestigten Vorrichtung, mit sich in der Wartestellung befindendem Fangarm;
Fig. 5a eine Darstellung entsprechend Fig. 5, aber im Längsmittelschnitt der Vorrichtung;
Fig. 6 einen Schnitt entlang der Linie AA von Fig. 5 bzw. 5a;
Fig. 7 und 8 Schnitte entsprechend Fig. 6, aber in einer Zwischenstellung und in der im eingefahrenen Zustand des ausziehbaren Möbelteils eingenommenen Grundstellung des Fangarms;
Fig. 9 einen Schnitt entlang der Linie BB von Fig. 5 bzw. 5a;
Fig. 10 eine Explosionsdarstellung;
Fig. 11 eine Schrägsicht der in einem parallel zur Achse und durch die Achse verlaufenden Schnitt aufgeschnittenen Vorrichtung;
Fig. 12 eine Darstellung zur Erläuterung der Einfahrbewegung des Fangarms der Vorrichtung in die Kulisse des Mitnehmers;
Fig. 13 eine geringfügig modifizierte Ausführungsvariante der Vorrichtung mit zusätzlichen Elementen zur Ausbildung einer Ausziehsperrvorrichtung;
Fig. 14 eine Explosionsdarstellung der Sperrstangen mit den an ihnen angebrachten Nockenfolgerteilen und dem dazwischen liegenden Betätigungsteil dieser modifizierten Ausführungsform.

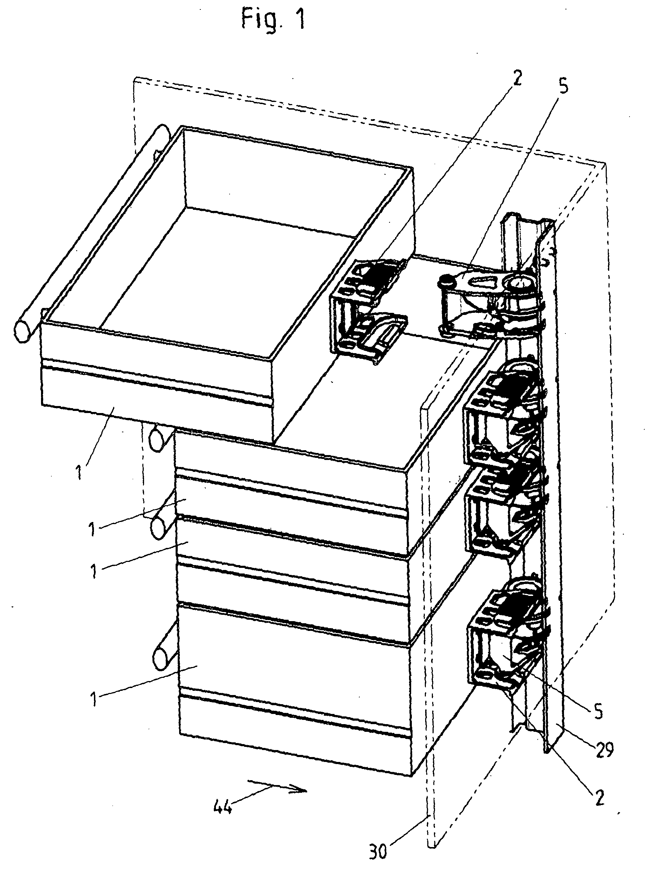

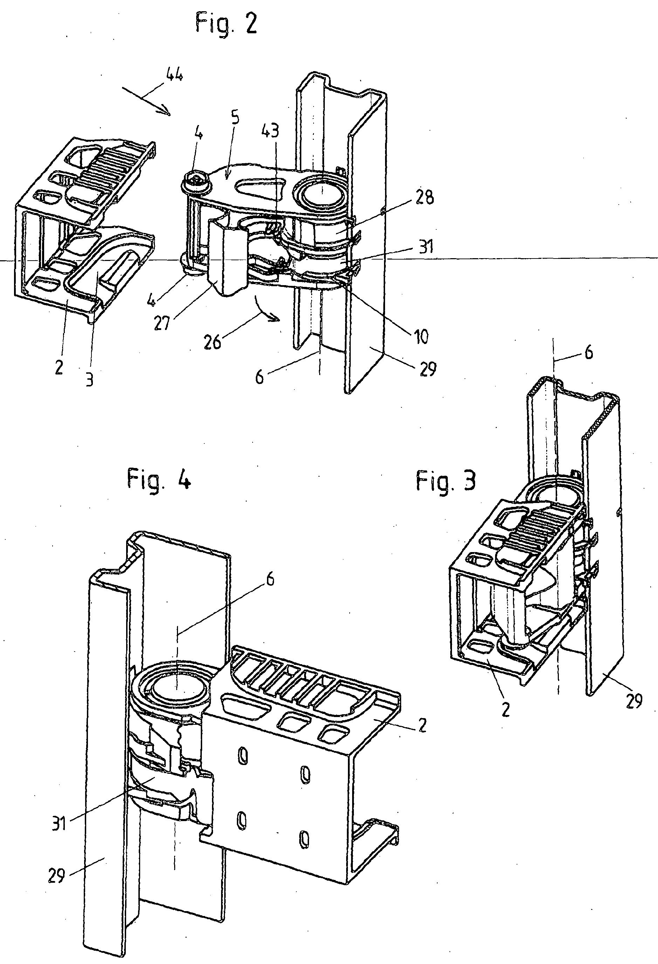

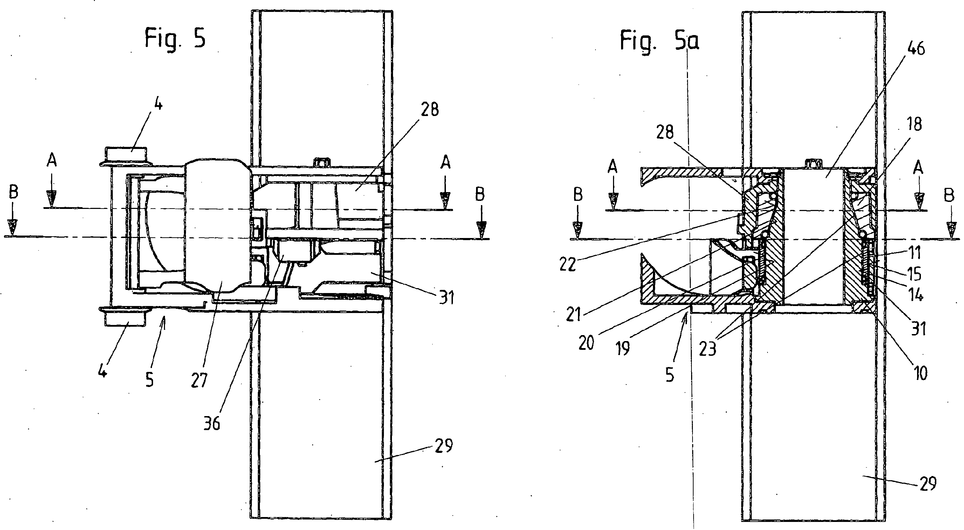

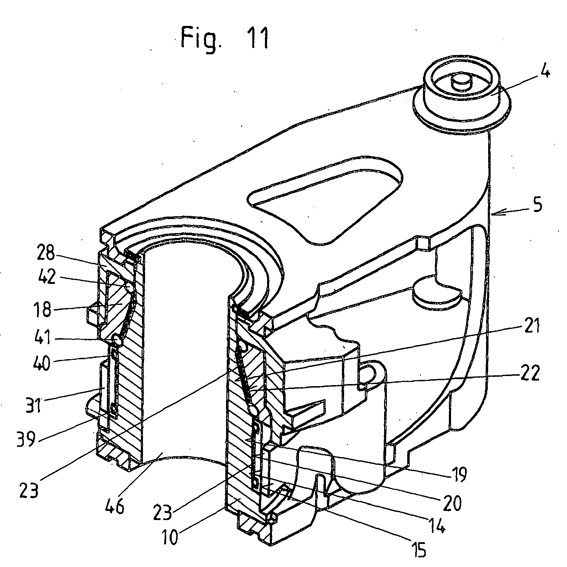

Eine erste Ausführungsform einer erfindungsgemäßen Vorrichtung ist in den Fig. 1 bis 12 dargestellt. Die Vorrichtung wir hier zum Dämpfen der Einschubbewegung von beweglich gelagerten Bauteilen 1 eingesetzt, die von Schubladen gebildet werden, wobei die Ausziehführungen für die Schubladen nicht dargestellt sind. Auch zum Dämpfen der Einschubbewegung von anderen ausziehbaren Möbelteilen kann die Vorrichtung in analoger Weise eingesetzt werden.

In die Vorrichtung ist hier eine Einzugsfeder 27 integriert, um zusätzlich zur Dämpfung einen Selbsteinzug für das ausziehbare Möbelteil über den letzten Teil des Einfahrweges bereitzustellen. Eine Einzugsfeder könnte grundsätzlich auch entfallen.

An der Rückseite eines jeweiligen zu dämpfenden Bauteils 1 ist ein Mitnehmer 2 angebracht, der Kulissenbahnen 3 aufweist, die wie dargestellt von Vertiefungen oder auch von Durchtrittsöffnungen gebildet werden können. Ein Fangarm 5 der Vorrichtung weist Vorsprünge 4 auf, die hier von Rollen gebildet werden und mit den Kulissenbahnen 3 zusammenwirken. Eine U-förmige Ausbildung des Mitnehmers 2 mit gegenüberliegenden Kulissenbahnen 3, die jeweils mit einem Vorsprung 4 zusammenwirken, ist bevorzugt, wobei auch eine einzelne mit einem Vorsprung 4 zusammenwirkende Kulissenbahn 3 vorgesehen sein könnte. Auch eine umgekehrte Ausbildung ist möglich, bei der mindestens eine Kulissenbahn am Fangarm und mindestens ein Vorsprung am Mitnehmer vorgesehen ist. Der mindestens eine Vorsprung 4 könnte auch in Form eines Zapfens ausgebildet sein.

Im eingeschobenen Zustand des ausziehbaren Möbelteils (vgl. die drei unteren Schubladen in Fig. 1 sowie die Fig. 3, 4 und 8) nimmt der Fangarm 5 seine Grundstellung ein. Beim Ausziehen des ausziehbaren Möbelteils in die Ausziehrichtung 68 wird der Fangarm 5 um die Achse 6 verschwenkt, bis er seine Wartestellung einnimmt (vgl. die obere Schublade in Fig. 1 und die Fig. 2, 5, 6 und 9). In dieser Position des Fangarms 5 koppelt der Mitnehmer 2 vom Fangarm 5 ab. Beim Einschieben des ausziehbaren Möbelteils (Bewegung in Richtung des Pfeils 44) koppelt der Mitnehmer 2 an den in seiner Wartestellung sich befindenden Fangarm 5 an, worauf sich der Fangarm 5 um die Achse 6 zurückdreht bis er wieder die Grundstellung einnimmt und das ausziehbare Möbelteil vollständig eingeschoben ist.

Auch andere Ausbildungen des Mitnehmers 2 und des Fangarms 5 sind möglich, um ein solches An- und Abkoppeln mit der Verschwenkung des Fangarms zwischen seiner Grundstellung und seiner Wartestellung zu ermöglichen. Beispielsweise könnte eine im Wesentlichen V-förmig ausgebildete Ausnehmung vorgesehen sein, in die ein Vorsprung einläuft, um den Fangarm vom Mitnehmer 2 zwischen seiner Wartestellung und seiner Grundstellung und zurück zu erstellen. Unterschiedliche Arten von möglichen Mitnahmeverbindungen sind beispielsweise von herkömmlichen ausziehbaren Möbelteilen mit Selbsteinzügen (=Einziehmechaniken) her bekannt.

Im gekoppelten Zustand des Fangarms 5 mit dem Mitnehmer 2 besteht eine formschlüssige Verbindung zwischen diesen beiden Teilen in die Bewegungsrichtung 44 und die entgegengesetzte Ausziehrichtung.

Das innere Bremsteil 10 und ein auf dieses aufgesetztes Gehäuseteil 28 sind drehfest mit der Montageschiene 29 verbunden, welche ihrerseits am Möbelkorpus 30 befestigt ist. Die Befestigung an der Montageschiene 29 erfolgt vorzugsweise durch Rastvorsprünge des inneren Bremsteils 10 und des Gehäuseteils 28, die in Ausnehmungen in der Montageschiene 29 eingreifen. Auch eine Befestigung der Vorrichtung direkt am Möbelkorpus 30 ist denkbar und möglich.

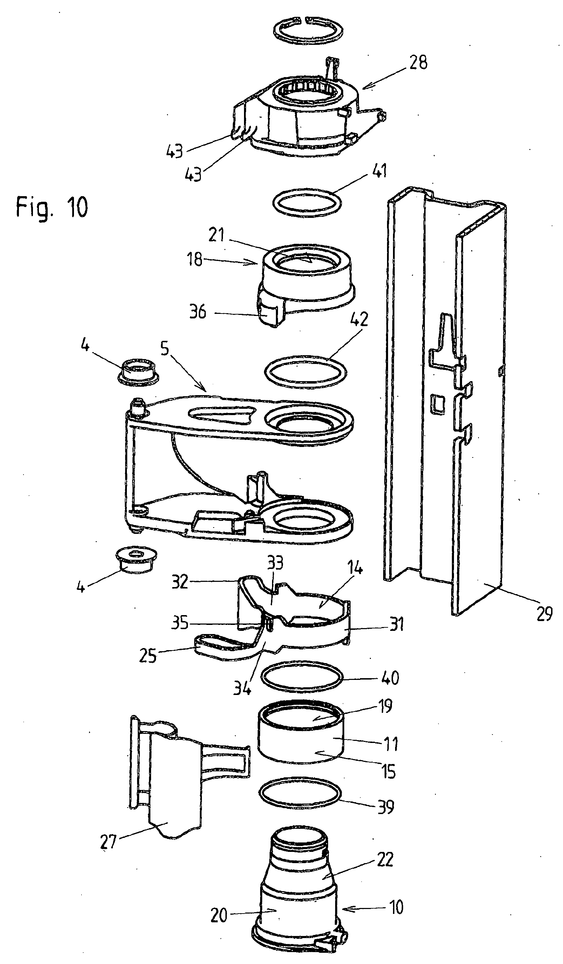

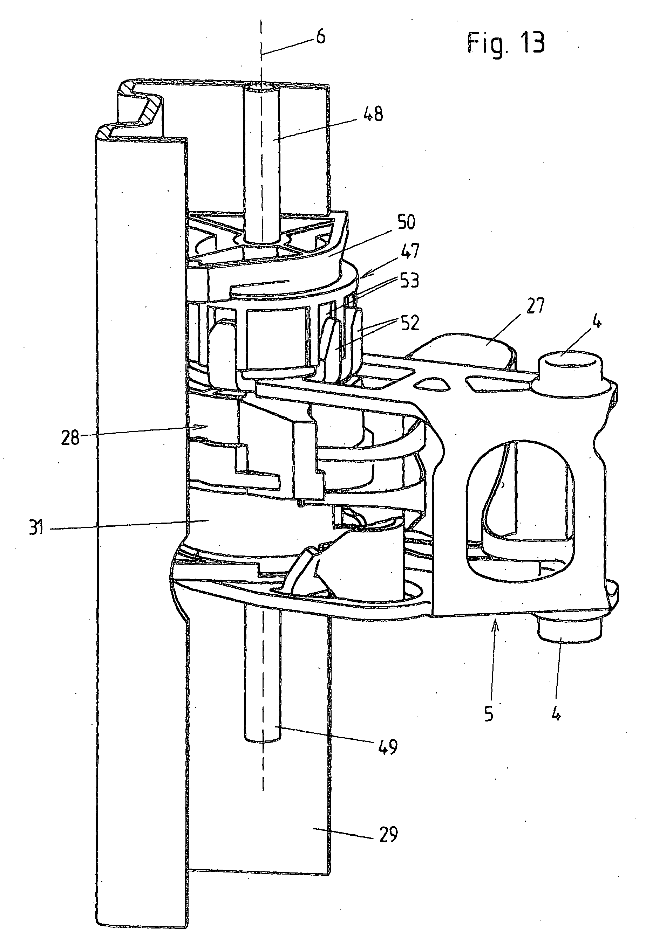

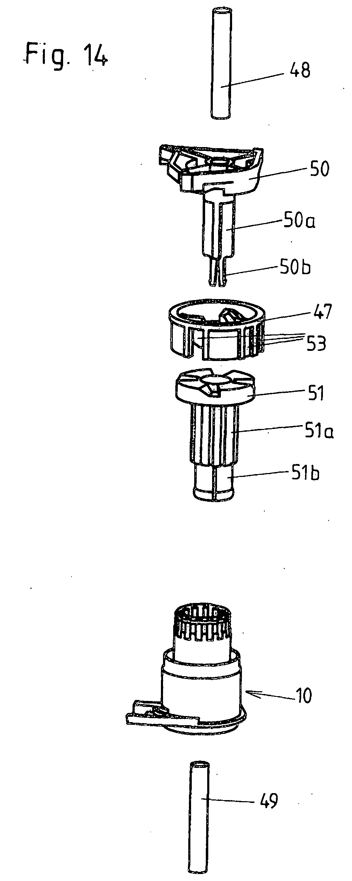

Die vom inneren Bremsteil 10 und vom Gehäuseteil 28 gebildete Einheit weist vorzugsweise einen diese axial vollständig durchsetzenden inneren Hohlraum auf (vgl. Fig. 10). Dieser kann Teile einer Ausziehsperrvorrichtung aufnehmen, wie weiter unten anhand von Fig. 13 und 14 beschrieben wird.

Der Fangarm 5 ist an der vom inneren Bremsteil 10 und dem Gehäuseteil 28 gebildeten Einheit um die Achse 6 drehbar gelagert.

Der Fangarm 5 ist mit einem vorgeformten, aber durch seine Elastizität flexiblen Umschlingungsteil 31 verbunden, sodass das Umschlingungsteil 31 bei einer Drehung des Fangarms 5 um die Achse 6 in Richtung des Pfeils 26 ebenfalls um die Achse 6 gedreht wird. Das Umschlingungsteil 31 wird im Ausführungsbeispiel von einem Band gebildet und verläuft um einen Großteil des Umfangs des inneren Bremsteils 10 bzw. eines auf ihm angeordneten Ankuppelteils 11 um das innere Bremsteil 10 bzw. das Ankuppelteil 11 herum. Das Umschlingungsteil 31 und das Ankuppelteil 11 bilden Teile einer Kupplung, dessen Funktion weiter unten beschrieben wird. Die innere (=der Achse 6 zugewandte) Oberfläche des Umschlingungsteils 31 bildet eine erste Kupplungsfläche 14, die im geschlossenen Zustand der Kupplung mit der äußeren (=von der Achse 6 weggerichteten) Oberfläche des Kupplungsteils 11 zusammenwirkt, welche eine zweite Kupplungsfläche 15 bildet.

Die Verbindung des Fangarms 5 mit dem Umschlingungsteil 31 erfolgt über eine Überlastfeder 32, deren Funktion weiter unten erläutert wird. Die Überlastfeder 32 ist im gezeigten Ausführungsbeispiel einstückig mit dem Umschlingungsteil 31 ausgebildet und wird von einem bogen- bzw. schlaufenförmig verlaufenden Abschnitt des sowohl das Umschlingungsteil 31 als auch die Überlastfeder 32 bildenden Bandes gebildet. Die Geometrie dieses bogen- bzw. schlaufenförmigen Verlaufs und die Elastizität dieses Abschnitts des Bandes sind so ausgelegt, dass sich ein Federelement mit der gewünschten Federkennlinie ergibt. In modifizierten Ausführungsformen kann die Überlastfeder 32 auch von einem separaten Teil gebildet werden, das im Übertragungsweg zwischen dem Fangarm 5 und der mindestens einen angetriebenen Zusatz-Dämpferfläche 19 der Zusatz-Bremsvorrichtung angeordnet ist. Stattdessen oder zusätzlich könnte auch eine Überlastfeder an einer anderen Stelle im Übertragungsweg der vom zu dämpfenden Bauteil auf die Vorrichtung übertragenen und die Vorrichtung antreibenden Kraft angeordnet sein, beispielsweise auch zwischen dem inneren Bremsteil 10 und der Montageschiene 29. In anderen Ausführungsformen kann eine Überlastfeder auch entfallen.

Der Übergang zwischen dem Umschlingungsteil 31 und der Überlastfeder 32 kann als vordere Verbindungsstelle 33 des Umschlingungsteils 31 angesehen werden, an der die zu dämpfende Bewegung des Bauteils 1 in das Umschlingungsteil 31 eingeleitet wird.

An einer hinteren Verbindungsstelle 34 ist das Umschlingungsteil 31 mit einer Dämpferhülse 18 verbunden. Hierbei ist im gezeigten Ausführungsbeispiel ein axialer Vorsprung des Umschlingungsteils 31, der einen Schlitz 35 aufweist, in eine Ausnehmung im Bereich der in Fig. 10 unten liegenden Seite eines radialen Vorsprungs 36 der Dämpferhülse 18 eingeschoben, wobei der Schlitz 35 in einen in dieser Ausnehmung angeordneten Steg eingreift (die Ausnehmung des radialen Vorsprungs 36 und der darin angeordnete Steg sind in Fig. 10 nicht sichtbar).

Zwischen der vorderen Verbindungsstelle 33 und der hinteren Verbindungsstelle 34 erstreckt sich das Umschlingungsteil 31 über mehr als 90°, vorzugsweise über mehr als 180°, besonders bevorzugt über mehr als 250° in eine erste (dem Pfeil 26 entgegengesetzte) Drehrichtung bezogen auf die Achse 6 um das Ankuppelteil 11. Im gezeigten Ausführungsbeispiel beträgt diese Erstreckung weniger als 360°. Eine Erstreckung um mehr als 360° ist möglich, d.h. das Umschlingungsteil weist dann mehr als eine ganze Windung auf, wobei es schraubenförmig um das Ankuppelteil 11 verläuft.

Die hintere Verbindungsstelle 34 des Umschlingungsteils 31 ist über eine Offenhaltefeder 25 mit dem Fangarm 5 verbunden. Diese Offenhaltefeder 25 ist in diesem Ausführungsbeispiel einteilig mit dem Umschlingungsteil 31 ausgebildet und wird von einem bogen- bzw. schlaufenförmig verlaufenden Abschnitt des Bandes gebildet, das auch das Umschlingungsteil 31 und gegebenenfalls die Überlastfeder 32 ausbildet. Die Geometrie des bogen- bzw. schlaufenförmigen Verlaufs und die Elastizität dieses Abschnitts des Bandes sind an eine gewünschte Federkennlinie angepasst. Die Funktion der Offenhaltefeder 25, die beim Dämpfen der Bewegung des Bauteils 1 die hintere Verbindungsstelle des Umschlingungsteils gegenüber der vorderen Verbindungsstelle des Umschlingungsteils in die Drehrichtung 26 (dies ist die entgegengesetzte Drehrichtung, in welche sich das Umschlingungsteil von der vorderen Verbindungsstelle zur hinteren Verbindungsstelle um die Achse 6 erstreckt) beaufschlagt wird weiter unten beschrieben.

Die Offenhaltefeder 25 könnte auch von einem separaten Teil gebildet werden oder gegebenenfalls auch entfallen.

Die Überlastfeder 32 ist wesentlich härter, vorzugsweise mehr als 10 mal härter als die Offenhaltefeder 25.

Die Dämpferhülse 18 umgibt einen Abschnitt des inneren Bremsteils 10. Die dem inneren Bremsteil 10 gegenüberliegende Fläche der Dämpferhülse 18 bildet eine angetriebene Dämpferfläche 21. Die der Dämpferhülse 18 gegenüberliegende äußere Oberfläche des inneren Bremsteils 10 bildet eine festgehaltene Dämpferfläche 22. Zwischen der angetriebenen Dämpferfläche 21 und der festgehaltenen Dämpferfläche 22 befindet sich ein ringförmiger Spalt, in dem ein viskoses Dämpfungsmedium 23 angeordnet ist. Dichtungsringe 41, 42 begrenzen den Spalt an seinen beiden Enden, sodass ein abgedichteter Raum ausgebildet wird. Als Dämpfungsmedium kann daher ein fließfähiges Öl eingesetzt werden. Der Einsatz eines nicht fließfähigen Fettes ist aber ebenfalls möglich. Die Dichtungsringe 41, 42 könnten dann grundsätzlich auch entfallen.

Die Bremsvorrichtung umfasst somit die Dämpferhülse 18, das innere Bremsteil 10 und das Dämpfungsmedium 23.

Das ringförmige Ankuppelteil 11 umgibt einen Abschnitt des inneren Bremsteils 10. Die innere, dem inneren Bremsteil 10 gegenüberliegende Oberfläche des Ankuppelteils 11 bildet im geschlossenen Zustand der Kupplung eine angetriebene Zusatz-Dämpferfläche 19. Die dem Ankuppelteil 11 gegenüberliegende äußere Oberfläche des inneren Bremsteils 10 bildet eine festgehaltene Zusatz-Dämpferfläche 20. Zwischen der angetriebenen Zusatz-Dämpferfläche 19 und der festgehaltenen Zusatz-Dämpferfläche 20 befindet sich ein ringförmiger Spalt, in dem ein viskoses Dämpfungsmedium 23 angeordnet ist. Dichtungsringe 39, 40 begrenzen den Spalt an beiden Enden, sodass ein abgedichteter Raum ausgebildet wird. Als Dämpfungsmedium kann daher ein fließfähiges Öl eingesetzt werden. Der Einsatz eines nicht fließfähigen Fettes ist aber ebenfalls möglich. Die Dichtungsringe 39, 40 könnten dann auch entfallen.

Die Zusatz-Bremsvorrichtung umfasst somit das Ankuppelteil 11, das innere Bremsteil 10 und das Dämpfungsmedium 23.

Durch die Drehung des Fangarms 5 um die Achse 6 in die dem Pfeil 26 entsprechende Drehrichtung wird das Umschlingungsteil 31 um die Achse 6 gedreht, wodurch durch die Verbindung des Umschlingungsteils 31 mit der Dämpferhülse 18 diese um die Achse 6 gedreht wird. Die Achse 6 bildet sowohl die Drehachse der Bremsvorrichtung als auch die Drehachse der Zusatz-Bremsvorrichtung. Je nach Geschwindigkeit der Drehung der Dämpferhülse 18 um die Achse 6 übt die Bremsvorrichtung eine mehr oder weniger große Bremskraft aus, wodurch zwischen der vorderen Verbindungsstelle 33 und der hinteren Verbindungsstelle 34 des Umschlingungsteils 31 eine mehr oder weniger große Zugkraft wirkt.

Im Ruhezustand der Vorrichtung weist die erste Kuppelfläche 14 des Umschlingungsteils 31 zumindest abschnittsweise einen Abstand von der zweite Kuppelfläche 15 des Ankuppelteils 11 auf. Vorzugsweise weist das Umschlingungsteil 31 aufgrund seiner Vorformung im Ruhezustand über zumindest im Wesentlichen den gesamten Verlauf seiner Kuppelfläche 14, d.h. zumindest über 90% ihrer Ausdehnung in die Umfangsrichtung, einen Abstand von der Kuppelfläche 15 des inneren Bremsteils 10 auf.

Durch die Elastizität des Umschlingungsteils 31 und/oder durch die vorzugsweise vorhandene Offenhaltefeder 25 ist die Kuppelfläche 14 des Umschlingungsteils 31 dann bis zu einem Schwellenwert der Geschwindigkeit des Bauteils 1 bzw. einem Schwellenwert der Drehgeschwindigkeit des Fangarms 5 von der Kuppelfläche 15 des inneren Bremsteils 10 beabstandet (zumindest abschnittsweise) und die Kupplung ist geöffnet, d.h. die Drehbewegung des Umschlingungsteils 31 wird nicht auf das Ankuppelteil 11 übertragen. Die Zusatz-Bremsvorrichtung ist damit inaktiv, übt also keine Bremskraft aus.

Erst bei einer Überschreitung des Schwellenwerts schließt sich die Kupplung durch die von der Bremsvorrichtung ausgeübte Bremskraft, indem das Umschlingungsteil 31 derart an das Ankuppelteil 11 angelegt wird, dass eine Mitnahmeverbindung ausgebildet wird, d.h. bei einer Drehung des Umschlingungsteils 31 um die Achse 6 wird das Ankuppelteil 11 vom Umschlingungsteil 31 ebenfalls um die Achse 6 gedreht. Die Mitnahmeverbindung ist im Ausführungsbeispiel reibschlüssig ausgebildet. Formschlüssig zusammenwirkende Elemente könnten stattdessen oder zusätzlich vorgesehen sein. Im geschlossenen Zustand der Kupplung ist die Zusatz-Bremsvorrichtung aktiv, übt also eine Bremskraft aus. Im Ausführungsbeispiel, in welchem die Zusatz-Bremsvorrichtung das im mindestens einen Spalt angeordnete viskose Dämpfungsmedium 23 aufweist, ist die von der Zusatz-Bremsvorrichtung ausgeübte Bremskraft geschwindigkeitsabhängig.

Um beim Zuschalten der Zusatz-Bremsvorrichtung durch Schließen der Kupplung eine angemessene Erhöhung der insgesamten Bremskraft zu erzielen, beträgt die von der Zusatz-Bremsvorrichtung ausgeübte Bremskraft günstigerweise mindestens ein Drittel der von der Bremsvorrichtung ausgeübten Bremskraft, vorzugsweise ist die von der Zusatz-Bremsvorrichtung ausgeübte Bremskraft größer als die von der Bremsvorrichtung ausgeübte Bremskraft, besonders bevorzugt mehr als doppelt so groß.

Für die Größen der Bremskraft der Bremsvorrichtung und der Bremskraft der Zusatz-Bremsvorrichtung können dadurch gewünschte Werte erreicht werden, dass für die mit dem Dämpfungsmedium gefüllten Spalte entsprechende Längen und/oder Breiten gewählt und/oder dass Dämpfungsmedien mit unterschiedlichen Viskositäten eingesetzt werden.

Bei einer hohen Geschwindigkeit, mit der das Bauteil 1 auf den Fangarm 5 auftrifft, würde es ohne die Überlastfeder 32 zu einer plötzlich auftretenden hohen Bremskraft der Vorrichtung kommen, wodurch unerwünscht hohe Belastungen und ein unerwünscht starkes Abbremsen des Bauteils 1 die Folge wären. Durch die Überlastfeder 32 wird die Spitze der Bremskraft abgefedert, indem sich der Fangarm 5 gegenüber dem Umschlingungsteil 31 unter Verformung der Überlastfeder 32 verdrehen kann.

Im dargestellten Ausführungsbeispiel ist weiters wie bereits erwähnt, eine Einzugsfeder 27 vorhanden, die, wenn lediglich die Dämpfungsfunktion gewünscht ist, auch entfallen könnte. Die Einzugsfeder 27 verläuft zwischen dem Fangarm 5 und der vom Gehäuseteil 28 und dem inneren Bremsteil 10 gebildeten Einheit. Insbesondere sind am Gehäuseteil 28 Rastarme 43 angeordnet, zwischen die das innere (= näher bei der Achse 6 gelegene) Ende der Einzugsfeder 27 eingerastet werden kann.

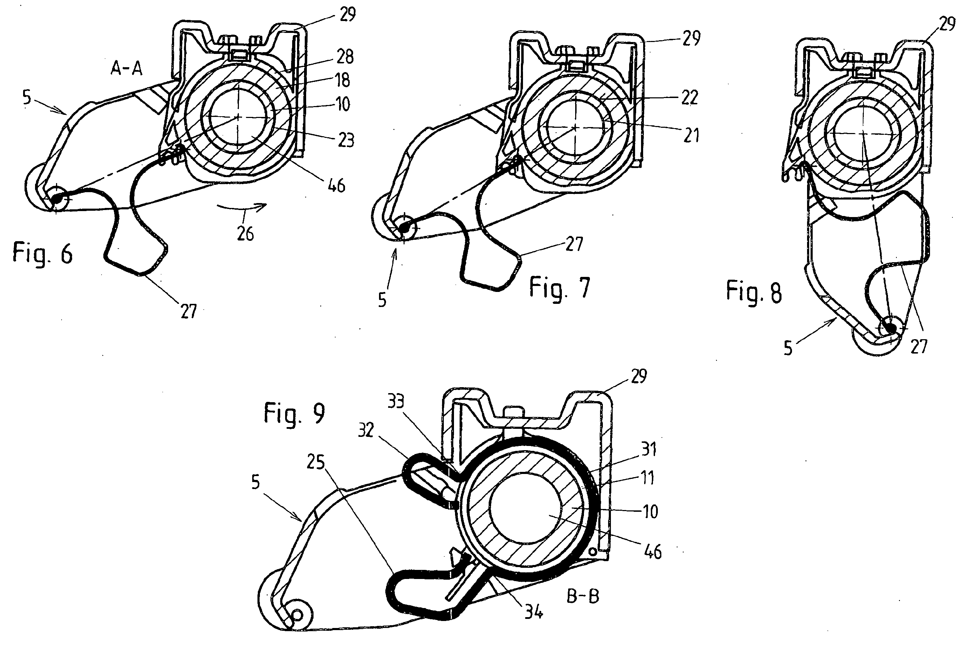

Beim Verschwenken des Fangarms 5 ausgehend von seiner Grundstellung in Richtung seiner Wartestellung wird die Einzugsfeder 27 zunächst gespannt, vgl. Fig. 8 und Fig. 7. Kurz vor Erreichen der Wartestellung wird ein Totpunkt überquert (dies ist die in Fig. 7 dargestellte Stellung), in der Folge wird die Einzugsfeder bis zum Erreichen der in Fig. 6 dargestellten Wartestellung wieder ein wenig entspannt (um vorzugsweise weniger als ein Fünftel des vorausgehenden Kompressionshubes).

Wenn beim Einschieben des ausziehbaren Möbelteils der Mitnehmer 2 an den Fangarm 5 anläuft, so koppeln diese beiden Teile aneinander an und der Mitnehmer 2 verschwenkt den Fangarm 5 über seinen Totpunkt. In der Folge wird das ausziehbare Möbelteil vom Fangarm 5 durch die Kraft der Einzugsfeder 27 eingezogen, bis die in Fig. 8 dargestellte Grundstellung des Fangarms erreicht ist. Die weitere Verschwenkung ist in der Wartestellung und der Grundstellung durch entsprechende Anschläge begrenzt (in der Grundstellung kann dies auch durch einen Anschlag für die Einschubbewegung des ausziehbaren Möbelteils erreicht werden).

Das Einziehen des ausziehbaren Möbelteils erfolgt hierbei gegen die von der Vorrichtung ausgeübte Bremskraft. Da die Geschwindigkeit des Einziehens, gegebenenfalls nach Dämpfung der zunächst schnelleren Geschwindigkeit beim Anlaufen gegen den Fangarm, relativ gering ist, sodass die Kupplung geöffnet ist, ist hierbei nur die Bremskraft der Bremsvorrichtung zu überwinden, während die Zusatz-Bremsvorrichtung inaktiv ist. Die Kraft der Einzugsfeder 27 kann damit relativ niedrig ausgelegt werden, was das Ausziehen des ausziehbaren Möbelteils erleichtert.

Wenn die Einzugsfeder 27 in unterschiedlichen Abständen von der Achse 6 mit dem Gehäuseteil 28 verbunden werden kann, indem beispielsweise mehrere Rastarme 43 vorgesehen sind, kann die Stärke der Einzugskraft durch unterschiedliche Vorspannungen der Einzugsfeder 27 verändert werden. Auch Verbindungsmöglichkeiten an unterschiedlichen Stellen des Fangarms 5 können vorgesehen sein oder eine kontinuierliche Änderung des Abstands von der Achse, z.B. durch ein Exzenterelement, kann vorgesehen sein.

Im Ausführungsbeispiel ist als Einzugsfeder eine gebogene Blattfeder vorgesehen. Auch in anderer Weise ausgebildete Einzugsfedern können vorgesehen sein. Beispielsweise könnte eine Schenkelfeder eingesetzt werden, von der ein Schenkel mit dem Fangarm 5 und der andere Schenkel mit dem Gehäuseteil 28 verbunden ist. Beispielsweise könnte auch eine gebogene Blattfeder vorgesehen sein, die in einen mittleren Bereich gegebenenfalls eine größere Breite als in den endseitigen Anbindungsbereichen aufweist und auch beispielsweise nach oben oder unten gebogen verlaufen kann.

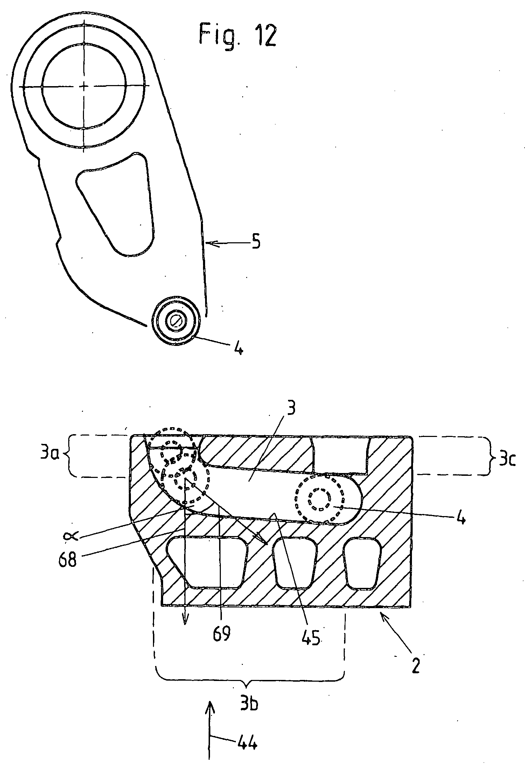

Das Einlaufen eines der Vorsprünge 4 des Einziehhebels 5 in die zugehörige Kulissenbahn 3 des Mitnehmers 2 beim Verschieben des Bauteils 1 in die Bewegungsrichtung 44 ist in Fig. 12 dargestellt. Die gebogen verlaufende Kulissenbahn 3 (der Verlauf beider Kulissenbahnen 3 ist identisch) besitzt einen Einlaufabschnitt 3a, an dessen Anfang der Vorsprung 4 von außerhalb der Kulissenbahn 3 in die Kulissenbahn 3 einfährt. Über den Einlaufabschnitt 3a führt die Kulissenbahn 3 den Vorsprung 4 in eine Richtung 69, die einen Winkel α von weniger als 30° mit der der Bewegungsrichtung 44 entgegengerichteten Ausziehrichtung 68 einschließt. Der Winkel α nimmt hierbei vom Anfang des Einlaufabschnitts 3a, bei welchem dieser Winkel α vorzugsweise weniger als 20° beträgt, besonders bevorzugt weniger als 15°, bis zum Ende des Einlaufabschnitts 3a kontinuierlich zu. Das Ende des Einlaufabschnitts 3a und der Beginn eines Fortsetzungsabschnitts 3b der Kulissenbahn 3 liegen also dort, wo dieser Winkel α den Wert von 30° erreicht. Über den Fortsetzungsabschnitt 3b nimmt dieser Winkel α weiter zu, bis er jedenfalls mehr als 45°, im gezeigten Ausführungsbeispiel zwischen 80° und 90° beträgt. In Fig. 12 ist der Winkel α für eine Position des Vorsprungs 4 innerhalb des Fortsetzungsabschnitts 3b eingezeichnet, in welcher der Winkel α etwas mehr als 45° beträgt.

Im gezeigten Ausführungsbeispiel ist der Winkel α, sobald er seinen maximalen Wert erreicht hat, bis zum Ende des Fortsetzungsabschnitts 3b konstant. Auch eine gekrümmte Ausbildung der Kulisse 3 zum vom Einlaufabschnitt 3a abgelegenen Ende des Fortsetzungsabschnitts 3b hin ist in anderen Ausführungsbeispielen möglich.

Der Vorsprung 4 ist von der Kulissenbahn 3 somit zumindest über einen an den Anfang des Einlaufabschnitts 3a anschließenden Teil des Einlaufabschnitts von der Kulissenbahn 3 unter einem Winkel von weniger als 20°, vorzugsweise weniger als 15° zur Ausziehrichtung 68 geführt. Zumindest über einen Teil des Fortsetzungsabschnitts 3b ist der Vorsprung 4 von der Kulissenbahn 3 vorzugsweise in eine Richtung geführt, die mit der Ausziehrichtung 68 einen Winkel von mehr als 70°, vorzugsweise mehr als 80° einschließt.

In Fig. 12 sind drei Stellungen des Vorsprungs 4 beim Einlaufen in die Kulissenbahn 3 mit strichlierten Linien dargestellt. Die erste Stellung zeigt gerade das erste Anlaufen des Vorsprungs 4 an die Seitenwand 45 der Kulissenbahn 3, durch welche der Einziehhebel 5 über den Totpunkt verschwenkt wird (diese Seitenwand 45 ist dann im Fortsetzungsabschnitt 3b die bezogen auf die Bewegungsrichtung 44 des Bauteils 1 hinten liegende Seitenwand der Kulissenbahn 3). Der Winkel α beträgt hier weniger als 20°, vorzugsweise weniger als 10°. In der zweiten Position befindet sich der Vorsprung 4 bereits im Fortsetzungsabschnitt 3b, wobei hier der Winkel α knapp größer als 45° ist. In der dritten dargestellten Position befindet sich der Vorsprung 4 im Fortsetzungsabschnitt 3b an der Stelle, die er im vollständig eingeschobenen Zustand des ausziehbaren Möbelteils einnimmt, wobei der Winkel α hier im Ausführungsbeispiel zwischen 80° und 90° liegt. Die Seitenwand 45 verläuft jeweils in die Richtung, in die der Vorsprung 4 von der Kulissenbahn 3 geführt ist, sodass der Winkel, den die Seitenwand 45 jeweils mit der Ausziehrichtung 68 einschließt, dem Winkel α zwischen der Richtung der Führung des Vorsprungs 4 und der Ausziehrichtung 68 entspricht.

Durch den beschriebenen gebogenen Verlauf der mindestens einen Kulissenbahn 3 kann die zur Betätigung des Fangarms 5 erforderliche Kraft beim Einschieben des Bauteils 1 beeinflusst werden. Insbesondere ergibt sich durch den Verlauf des Einlaufabschnitts 3a eine Art Übersetzung. Die auf das Bauteil 1 wirkende Dämpfungskraft wird dadurch, wenn das Bauteil 1 mit einer bestimmten Geschwindigkeit an den Fangarm 5 anläuft, zu Beginn des Anlaufens, wenn sich der Vorsprung 4 im Bereich des Einlaufabschnitts 3a der Kulissenbahn 3 befindet, verringert. Weiters kann dadurch der Totpunkt der Einzugsfeder 27 (wenn eine solche vorhanden ist) durch eine geringere vom Bauteil 1 aufzubringende Kraft überwunden werden.

Aus Fig. 12 geht weiters ein Selbstheil-Abschnitt 3c der Kulissenbahn 3 hervor. Durch diesen kann der jeweilige Vorsprung 4 in den Fortsetzungsabschnitt 3b einlaufen, wenn der Mitnehmer 2 beim Einschieben des Bauteils 1 an den in seiner Grundstellung sich befindenden Einziehhebel 5 anlaufen sollte. Der Selbstheil-Abschnitt verläuft zumindest im Wesentlichen (d.h. eine Abweichung von weniger als 15° liegt vor) parallel zur Ausziehrichtung 68. Die Selbstheil-Abschnitte 3c sind zu ihren offenen Enden hin durch Einlaufschrägen verbreitert. Damit ein Einfahren der Vorsprünge 4 durch die Selbstheil-Abschnitte 3c ermöglicht wird, die Vorsprünge 4 aber nicht durch die Selbstheil-Abschnitte 3c aus den Fortsetzungsabschnitten 3b auslaufen können, können die Elastizitäten der Bauteile ausgenützt werden (sodass der Vorsprung 4 wie in Fig. 12 im eingefahrenen Zustand des Bauteils 1 versetzt zum Selbstheil-Abschnitt 3c liegt). Beispielsweise könnte auch beim Einfahren der Vorsprünge 4 durch die Selbstheil-Abschnitte 3c ein Überfahren von Stufen vorgesehen sein, wobei die die Kulissenbahnen 3 aufweisenden Seitenwangen 2a, 2b auseinandergedrückt werden. Zusätzlich oder stattdessen könnten am Mitnehmer 2 angeordnete, zusätzliche federelastische Rastelemente vorgesehen sein.

Beim Zurückdrehen des Fangarms 5 in die dem Pfeil 26 entgegengesetzte Drehrichtung wird vom Fangarm 5 über die Offenhaltefeder 25 die Dämpferhülse 18 gedreht, sodass die hierbei zu überwindende Kraft auszuüben ist. Diese Kraft ist vergleichsweise gering, da die Zusatz-Bremsvorrichtung in diese Drehrichtung nicht wirksam ist. Wenn die Aufbringung einer solchen Kraft aber nicht gewünscht ist, kann zwischen einem mit dem Umschlingungsteil 31, gegebenenfalls über die Offenhaltefeder 25 und/oder die Überlastfeder 32, verbundenen Teil und dem Fangarm 5 ein Freilauf vorgesehen sein, der in die dem Pfeil 26 entgegengesetzte Drehrichtung geschlossen ist und sich in die entgegengesetzte Drehrichtung öffnet. Solche Freilaufe sind bekannt, auch im Zusammenhang mit Dämpfern.

In einer gegenüber der dargestellten Ausführungsform modifizierten Ausführungsform könnte der Fangarm 5 auch verschwenkbar an der Dämpferhülse 18 gelagert sein und zwar um eine zur Achse 6 parallele Drehachse. Die Anbindung des Umschlingungsteils 31 oder der mit dem Umschlingungsteil 31 verbundenen Überlastfeder 32 könnte dann am Fangarm radial außerhalb dieser Schwenkachse erfolgen. Durch eine Rückstellfeder könnte der Fangarm 5 in eine Anfangsstellung bezüglich seiner Schwenkachse gegenüber der Dämpferhülse 18 beaufschlagt sein. Beim Dämpfen der Bewegung des Bauteils 1, wenn der Fangarm 5 gegen die Kraft der ihn beaufschlagenden Rückstellfeder um die Schwenkachse mehr oder weniger verschwenkt wird, da die Drehung der Schwenkachse um die Achse 6 von der Bremskraft der Bremsvorrichtung gebremst wird, wird auf das Umschlingungsteil 31 eine mehr oder weniger große Zugkraft ausgeübt, wodurch bei einer ausreichend hohen Drehgeschwindigkeit der Dämpferhülse 18 die Kupplung geschlossen wird.

Auch andere linear verschiebbar gelagerte Bauteile als ausziehbare Möbelteile können von der Bremsvorrichtung gedämpft werden. Weiters ist auch eine Dämpfung von drehbar gelagerten Bauteilen möglich, wobei je nach Anwendungsfall eine Einzugsfeder 27 vorgesehen sein kann oder auch entfallen kann. Eine Anbindung des zu dämpfenden Bauteils an die Vorrichtung kann gegebenenfalls auch in anderer Weise als über einen um die Achse 6 drehbar gelagerten, radial auskragenden Fangarm (=Fanghebel) erfolgen, beispielsweise über ein um die Achse 6 drehbar gelagertes Ritzel, das mit dem Umschlingungsteil 31, gegebenenfalls über eine Überlastfeder 32 verbunden ist.

Das Umschlingungsteil 31 kann statt von einem Band auch von einem Draht, insbesondere Federdraht, bzw. einer Schnur gebildet werden. Der Umschlingungswinkel des Drahtes bzw. der Schnur liegt günstigerweise zwischen 250° und 720°.

Auch eine kinematische Umkehr ist möglich, wobei das innere Bremsteil 10 bzw. die das innere Bremsteil 10 und gegebenenfalls auch das Gehäuseteil 28 umfassende Einheit vom zu dämpfenden Bauteil 1 angetrieben wird und das Umschlingungsteil 31 an seiner vorderen Verbindungsstelle 33 und über dieses die Dämpferhülse 18 festgehalten wird. Die zuvor beschriebene und in der Zeichnung dargestellte angetriebene Dämpferfläche 21 wird dann zur festgehaltenen Dämpferfläche und umgekehrt. Die zuvor beschriebene und in der Zeichnung dargestellte angetriebene Zusatz-Dämpferfläche 19 wird dann zur festgehaltenen Zusatz-Dämpferfläche und umgekehrt. Hierbei wird die angetriebene Zusatz-Dämpferfläche unabhängig davon, ob die Kupplung geschlossen oder geöffnet ist, durch die Bewegung des Bauteils angetrieben, während die festgehaltene Zusatz-Dämpferfläche nur im geschlossenen Zustand der Kupplung festgehalten ist (und sich im geöffneten Zustand der Kupplung mit der angetriebenen Zusatz-Dämpferfläche mitdreht). Das Festhalten des Umschlingungsteils könnte dann auch von einem anderen Teil als von einem von der Achse 6 abstehenden Arm (entsprechend dem Fangarm 5) erfolgen.

Aus den Fig. 13 und 14 geht eine Modifikation der zweiten Ausführungsform der Erfindung hervor, welche die Integration einer Ausziehsperrvorrichtung in eine erfindungsgemäße Vorrichtung darstellt. Abgesehen von den im Folgenden beschriebenen Unterschieden ist die erfindungsgemäße Vorrichtung gleich wie die anhand der Fig. 1 bis 12 beschriebene Ausführungsform der erfindungsgemäßen Vorrichtung ausgebildet.

Ausziehsperrvorrichtungen dienen dazu, dass von mehreren über die Ausziehsperrvorrichtung miteinander gekoppelten ausziehbaren Möbelteilen nur eines gleichzeitig ausziehbar ist. Erst nach dem Einschieben dieses ausziehbaren Möbelteils kann ein anderes ausgezogen werden. Weiters kann über eine solche Ausziehsperrvorrichtung, falls gewünscht, eine Zentralverriegelung bereitgestellt werden.

Bei der im Ausführungsbeispiel gezeigten Ausbildung der Ausziehsperrvorrichtung verlaufen zwischen Betätigungsteilen, die den einzelnen ausziehbaren Möbelteilen zugeordnet sind, Sperrstangen, die nur einen begrenzten Freiraum (=ein begrenztes Spiel) für ihre Verschiebung aufweisen. Wird eines der ausziehbaren Möbelteile ausgezogen, so werden die beiden (falls es sich um ein mittleres ausziehbares Möbelteil handelt, bei dessen Betätigungsteil beidseitig Sperrstangen angeordnet sind) mit dem Betätigungsteil zusammenwirkenden Sperrstangen vom Betätigungsteil auseinanderbewegt. Dadurch ist der vorhandene Freiraum aufgebraucht, sodass eine Auseinanderbewegung der mit einem anderen der Betätigungsteile zusammenwirkenden Sperrstangen nicht mehr möglich ist und somit kein weiteres ausziehbares Möbelteil mehr ausgezogen werden kann. Das Betätigungsteil eines endseitigen ausziehbaren Möbelteils kann auch nur mit einer Sperrstange zusammenwirken, welche es beim Ausziehen dieses ausziehbaren Möbelteils verschiebt. Die prinzipielle Ausbildung der Ausziehsperrvorrichtung entspricht insoweit dem Stand der Technik, beispielsweise entsprechend den eingangs genannten Schriften zu Ausziehsperrvorrichtungen.

Die vom inneren Bremsteil 10 und Gehäuseteil 28 gebildete Einheit weist einen in Richtung der Achse 6 sich erstreckenden, die Einheit vollständig durchsetzenden Hohlraum 46 auf. Von diesem können Teile der Ausziehsperrvorrichtung aufgenommen werden.

Durch ein, beim Ausziehen und Einschieben des ausziehbaren Möbelteils um die Achse 6 gedrehtes Teil, im gezeigten Ausführungsbeispiel durch den Fangarm 5, wird ein diesem ausziehbaren Möbelteil zugeordnetes Betätigungsteil 47 verstellt. Wenn ober- und unterhalb des ausziehbaren Möbelteils weitere ausziehbare Möbelteile angeordnet sind, so verschiebt das Betätigungsteil 47 eine obere Sperrstange 48 nach oben und/oder eine untere Sperrstange 49 nach unten. Falls es sich um das unterste ausziehbare Möbelteil handelt, könnte lediglich eine obere Sperrstange 48 nach oben verschoben werden. Falls es sich um das oberste ausziehbare Möbelteil handelt, könnte lediglich eine untere Sperrstange 49 nach unten verschoben werden.

Das Betätigungsteil 47 ist in diesem Ausführungsbeispiel als um die Achse 6 drehbare Nockenscheibe ausgebildet. An den vom Betätigungsteil 47 betätigten Sperrstangen 48, 49 ist jeweils ein Nockenfolgerteil 50, 51 angebracht, wobei Nockenfolgerteile 50, 51 gegen eine Verdrehung um die Achse 6 gesichert sind.

Bei einer Verdrehung des Betätigungsteils 47 um die Achse 6 in eine erste Drehrichtung werden die beiden Nockenfolgerteile 50, 51 auseinandergedrückt (durch eine Verschiebung mindestens einer der Sperrstangen parallel zur Achse 6) und bei einer Verdrehung in die entgegengesetzte Drehrichtung (entsprechend dem Pfeil 26) können sie sich wieder annähern.

Das Betätigungsteil 47 kann gegenüber dem Fangarm 5 in Richtung der Achse 6 um eine begrenzte Wegstrecke verschoben werden, wobei es dennoch in drehfester. Verbindung mit dem Fangarm 5 bleibt. Im Ausführungsbeispiel weist hierzu der Fangarm 5 in Richtung der Achse 6 sich erstreckende Klauen 52 auf, die in Ausnehmungen 53 des Betätigungsteils 47 eingreifen.

Eine Verschiebung zumindest einer der Sperrstangen 48, 49 durch ein einem der ausziehbaren Möbelteile zugeordnetes Betätigungsteil, ohne dass die drehfeste Verbindung der restlichen Betätigungsteile mit dem jeweils zugehörigen Fangarm aufgehoben wird, wird dadurch ermöglicht.

Das Nockenfolgerteil 50 besitzt einen axialen Fortsatz 50a mit Rastzungen 50b. Das Nockenfolgerteil 51 besitzt einen axialen Fortsatz 51 a mit Rastzungen 51b.

Das Nockenfolgerteil 51 ist mit dem Fortsatz 51a in den Hohlraum 46 einsteckbar und das Nockenfolgerteil 50 ist mit dem Fortsatz 50a durch eine zentrale Öffnung des Betätigungsteils 47 hindurch in eine zentrale Öffnung des Nockenfolgerteils 51 einsteckbar. Durch die Rastzungen 50b, 51b werden die Teile zur Montageerleichterung vor dem Zusammenbau der Vorrichtung zusammengehalten, wobei nach der Montage die erforderlichen Bewegungsspielräume erhalten bleiben.

Die Betätigung der Sperrstangen 48, 49 könnte auch in anderer Weise erfolgen. Beispielsweise könnte das Betätigungsteil in Form eines Nockenteils ausgebildet sein, welches um eine rechtwinkelig zur Achse 6 liegende Schwenkachse verschwenkbar ist. Das Betätigungsteil wirkt hierbei mit dem Ende der mindestens einen angrenzenden Sperrstange 48, 49 oder einem mit dieser Sperrstange verbundenen Teil zusammen, um die Sperrstange 48, 49 bei seiner Verschwenkung um die Schwenkachse in die jeweilige Richtung parallel zur Achse 6 zu verschieben. Das Betätigungsteil ist hierbei mit dem Fangarm 5 derart gekoppelt (beispielsweise über ein gabelförmiges Mitnehmerteil und einen Zapfen), dass es bei der Vedrehung des Fangarms 5 um die Achse 6 verschwenkt wird.

Die durch die Ausziehsperrvorrichtung miteinander gekoppelten ausziehbaren Möbelteile könnten auch nebeneinander statt vertikal übereinander angeordnet sein. Die Sperrstangen 48, 49 und die Achse 6 wären dann horizontal angeordnet. Die in der vorausgehenden Beschreibung verwendeten Begriffe "oben" und "unten" müssten dann durch "links" und "rechts" ersetzt werden. Grundsätzlich denkbar und möglich sind auch gegenüber der Horizontalen geneigte Anordnungen der Sperrstangen 48, 49 und der Achse 6.

In den zuvor beschriebenen Ausführungsbeispielen stimmt die Achse der Bremsvorrichtung jeweils mit der Achse der Zusatz-Bremsvorrichtung überein, wie dies bevorzugt ist. Es sind aber auch Ausbildungen denkbar und möglich, bei denen diese Achsen beispielsweise parallel zueinander liegen, aber einen Abstand voneinander aufweisen. Auch winkelige Ausrichtungen zwischen diesen Achsen sind grundsätzlich möglich. Zwischen der Bremsvorrichtung und der Zusatz-Bremsvorrichtung müssten dann entsprechende Übertragungsglieder beispielsweise Zahnräder vorgesehen sein. Die Kupplung wäre dann vorzugsweise koaxial mit der Bremsvorrichtung oder mit der Zusatz-Bremsvorrichtung ausgebildet.

**Legende zu den Hinweisziffern:**

| | | | |
|---|---|---|---|
| 1 | Bauteil | 32 | Überlastfeder |
| 2 | Mitnehmer | 33 | vordere Verbindungsstelle |
| 3 | Kulissenbahn | 34 | hintere Verbindungsstelle |
| 3a | Einlaufabschnitt | 35 | Schlitz |
| 3b | Fortsetzungsabschnitt | 36 | Vorsprung |
| 3c | Selbstheil-Abschnitt | 39 | Dichtungsring |
| 4 | Vorsprung | 40 | Dichtungsring |
| 5 | Fangarm | 41 | Dichtungsring |
| 6 | Achse | 42 | Dichtungsring |
| 10 | inneres Bremsteil | 43 | Rastarm |
| 11 | Ankuppelteil | 44 | Bewegungsrichtung |
| 14 | erste Kuppelfläche | 45 | Seitenwand |
| 15 | zweite Kuppelfläche | 46 | Hohlraum |
| 18 | Dämpferhülse | 47 | Betätigungsteil |
| 19 | angetriebene Zusatz- | 47a | Betätigungsarm |
| | Dämpferfläche | 48 | Sperrstange |
| 20 | festgehaltene Zusatz- | 49 | Sperrstange |
| | Dämpferfläche | 50 | Nockenfolgerteil |
| 21 | angetriebene Dämpferfläche | 50a | Fortsatz |
| 22 | festgehaltene Dämpferfläche | 50b | Rastzunge |
| 23 | Dämpfungsmedium | 51 | Nockenfolgerteil |
| 25 | Offenhaltefeder | 51a | Fortsatz |
| 26 | Pfeil | 51b | Rastzunge |
| 27 | Einzugsfeder | 52 | Klaue |
| 28 | Gehäuseteil | 53 | Ausnehmung |
| 29 | Montageschiene | 68 | Ausziehrichtung |
| 30 | Möbelkorpus | 69 | Richtung |
| 31 | Umschlingungsteil | | |

## Patentansprüche

1. Vorrichtung zur Dämpfung der Bewegung eines beweglich gelagerten Bauteils (1), umfassend eine Bremsvorrichtung, die mindestens eine um eine Achse (6) der Bremsvorrichtung drehbare, durch die Bewegung des Bauteils (1) angetriebene Dämpferfläche (21) aufweist, die mit mindestens einer festgehaltenen Dämpferfläche (22) mindestens einen eine Spaltbreite im Bereich von 0,1 mm bis 0,5mm aufweisenden Spalt einschließt, in welchem sich ein viskoses Dämpfungsmedium (23) mit einer Viskosität von mehr als 20.000 Pa s befindet, welches beim Verdrehen der mindestens einen angetriebenen Dämpferfläche (21) gegenüber der mindestens einen festgehaltenen Dämpferfläche (22) eine die Drehung der mindestens einen angetriebenen Dämpferfläche (21) um ihre Achse (6) bremsende Bremskraft der Bremsvorrichtung hervorruft, wobei die von der Bremsvorrichtung ausgeübte Bremskraft von der Drehgeschwindigkeit der mindestens einen angetriebenen Dämpferfläche (21) abhängt, **dadurch gekennzeichnet, dass** die Vorrichtung eine Zusatz-Bremsvorrichtung und eine Kupplung aufweist, in deren geschlossenem Zustand mindestens eine antreibbare Zusatz-Dämpferfläche (19) der Zusatz-Bremsvorrichtung durch die Bewegung des Bauteils (1) um eine Achse (6) der Zusatz-Bremsvorrichtung angetrieben ist und sich gegenüber mindestens einer festgehaltenen Zusatz-Dämpferfläche (20) um die Achse (6) der Zusatz-Bremsvorrichtung dreht, wobei die Zusatz-Bremsvorrichtung eine Zusatz-Bremskraft ausübt, und in deren geöffnetem Zustand die mindestens eine antreibbare Zusatz-Dämpferfläche (19) von der Bewegung des Bauteils (1) abgekuppelt ist und damit nicht angetrieben ist und die Zusatz-Bremsvorrichtung inaktiv ist, und dass die Betätigung der Kupplung durch die von der Bremsvorrichtung ausgeübte Bremskraft erfolgt, wobei die Kupplung bei einer unter einem Schwellenwert liegenden Drehgeschwindigkeit der mindestens einen angetriebenen Dämpferfläche (21) geöffnet und bei einer über dem Schwellenwert liegenden Drehgeschwindigkeit der mindestens einen angetriebenen Dämpferfläche (21) geschlossen ist.

2. Vorrichtung nach Anspruch 1, **dadurch gekennzeichnet, dass** die mindestens eine angetriebene Dämpferfläche (21) und die mindestens eine im geschlossenen Zustand der Kupplung angetriebene Zusatz-Dämpferfläche (19) koaxial sind.

3. Vorrichtung nach einem der Ansprüche 1 oder 2, **dadurch gekennzeichnet, dass** die mindestens eine angetriebene Zusatz-Dämpferfläche (19) mit mindestens einer festgehaltenen Zusatz-Dämpferfläche (20) mindestens einen Spalt einschließt, in welchem sich ein viskoses Dämpfungsmedium (23) befindet, welches beim Verdrehen der mindestens einen angetriebenen Zusatz-Dämpferfläche (19) gegenüber der mindestens einen festgehaltenen Zusatz-Dämpferfläche (20) eine die Drehung der mindestens einen angetriebenen Zusatz-Dämpferfläche (19) um ihre Achse (6) bremsende Bremskraft der Zusatz-Bremsvorrichtung hervorruft, wobei die Bremskraft der Zusatz-Bremsvorrichtung von der Drehgeschwindigkeit der mindestens einen angetriebenen Zusatz-Dämpferfläche (19) abhängt.

4. Vorrichtung nach einem der Ansprüche 1 bis 3, **dadurch gekennzeichnet, dass** die Kupplung ein flexibel ausgebildetes Umschlingungsteil (31) aufweist, welches ein Ankuppelteil (11) zumindest um einen mehr als 90°, vorzugsweise mindestens 180°, betragenden Winkel um eine Achse (6) der Kupplung umgibt, wobei das Umschlingungsteil (31) mit einer Dämpferhülse (18) verbunden ist, die mindestens eine der Dämpferflächen (21, 22) der Bremsvorrichtung aufweist und wobei das Umschlingungsteil (31) und das Ankuppelteil (11) bei einer unter dem Schwellenwert liegenden Drehgeschwindigkeit der mindestens einen angetriebenen Dämpferfläche (21) gegeneinander verdrehbar sind und bei einer über dem Schwellenwert liegenden Drehgeschwindigkeit der mindestens einen angetriebenen Dämpferfläche (21) drehfest miteinander verbunden sind.

5. Vorrichtung nach Anspruch 4, **dadurch gekennzeichnet, dass** sich das Umschlingungsteil (31) von der vorderen Verbindungsstelle (33) zur hinteren Verbindungsstelle (34) in eine erste Drehrichtung um die Achse (6) der Kupplung erstreckt, dass die hintere Verbindungsstelle (34) des Umschlingungsteils (31) mit der Dämpferhülse (18) verbunden ist und dass die Übertragung der Bewegung des zu dämpfenden Bauteils (1) auf die vordere Verbindungsstelle (33) des Umschlingungsteils (31) erfolgt, wobei das Ankuppelteil (11) die im geschlossenen Zustand der Kupplung angetriebene Zusatz-Dämpferfläche (19) oder mindestens eine der angetriebenen Zusatz-Dämpferflächen (19) aufweist und eine mit dieser zusammenwirkende festgehaltene Dämpferfläche an einem festgehaltenen inneren Bremsteil (10) angeordnet ist, oder die Übertragung der Bewegung des zu dämpfenden Bauteils (1) auf das innere Bremsteil (10) erfolgt, wobei das innere Bremsteil (10) die angetriebene Zusatz-Dämpferfläche oder mindestens eine der angetriebenen Zusatz-Dämpferflächen aufweist, die mit der am Ankuppelteil (11) angeordneten im geschlossenen Zustand der Kupplung festgehaltenen Zusatz-Dämpferfläche zusammenwirkt, und das Umschlingungsteil (31) an der vorderen Verbindungsstelle (33) festgehalten ist.

6. Vorrichtung nach Anspruch 4 oder 5, **dadurch gekennzeichnet, dass** die Achse (6) der Kupplung mit der Achse (6) der Bremsvorrichtung und/oder mit der Achse (6) der Zusatz-Bremsvorrichtung übereinstimmt.

7. Vorrichtung nach Anspruch 6, **dadurch gekennzeichnet, dass** eine Offenhaltefeder (25) zumindest im Zustand der Vorrichtung, in dem diese die Bewegung des Bauteils (1) dämpft, die hintere Verbindungsstelle des Umschlingungsteils (31) gegenüber der vorderen Verbindungsstelle des Umschlingungsteils (31) in eine der ersten Drehrichtung entgegengesetzte zweite Drehrichtung um die Achse (6) der ersten Bremsvorrichtung beaufschlagt.

8. Vorrichtung nach einem der Ansprüche 4 bis 7, **dadurch gekennzeichnet, dass** die Dämpferhülse (18) die angetriebene Dämpferfläche (21) oder mindestens eine der angetriebenen Dämpferflächen (21) aufweist und der Antrieb der angetriebenen Dämpferfläche (21) oder mindestens einer der angetriebenen Dämpferflächen (21) über das Umschlingungsteil erfolgt und dass das Ankuppelteil (11) oder ein von diesem gedrehtes Teil die im geschlossenen Zustand der Kupplung angetriebene Zusatz-Dämpferfläche oder mindestens eine der im geschlossenen Zustand der Kupplung angetriebenen Zusatz-Dämpferflächen (21) aufweist.

9. Vorrichtung nach einem der Ansprüche 4 bis 8, **dadurch gekennzeichnet, dass** das Umschlingungsteil (31) bei einer über dem Schwellenwert liegenden Drehgeschwindigkeit der mindestens einen angetriebenen Dämpferfläche (21) mit dem Ankuppelteil (11) reibschlüssig verbunden ist.

10. Vorrichtung nach einem der Ansprüche 1 bis 9, **dadurch gekennzeichnet, dass** die Vorrichtung eine Überlastfeder (32) aufweist, welche im Übertragungsweg der vom zu dämpfenden Bauteil (1) auf die Vorrichtung übertragenen, die Vorrichtung antreibenden Kraft angeordnet ist.

11. Vorrichtung nach Anspruch 10, **dadurch gekennzeichnet, dass** die Überlastfeder (32) im Übertragungsweg zwischen dem Bauteil (1) und dem Umschlingungsteil (31) angeordnet ist.

12. Vorrichtung nach einem der Ansprüche 1 bis 11, **dadurch gekennzeichnet, dass** das zu dämpfende Bauteil (1) ein ausziehbares Möbelteil ist, das beim Einschieben an einen Fangarm (5) der Vorrichtung ankoppelt, der um eine Achse (6), die vorzugsweise mit der Achse (6) der Bremsvorrichtung und/oder der Achse (6) der Zusatz-Bremsvorrichtung zusammenfällt von einer Wartestellung in eine Grundstellung verschwenkbar ist und hierbei die mindestens eine angetriebene Dämpferfläche (21) der Bremsvorrichtung um die Achse (6) der Bremsvorrichtung verdreht.

13. Vorrichtung nach Anspruch 12, **dadurch gekennzeichnet, dass** der Fangarm (5) von einer Einzugsfeder (27) beaufschlagt ist, wobei die Einzugsfeder in der Wartestellung des Fangarms (5) stärker gespannt ist als in der Grundstellung des Fangarms (5) und bei der Verstellung des Fangarms (5) von der Grundstellung in die Wartestellung ein Totpunkt der Einzugsfeder (27) überwunden wird.

14. Vorrichtung nach einem der Ansprüche 1 bis 13, **dadurch gekennzeichnet, dass** am zu dämpfenden Bauteil (1) oder an einem vom zu dämpfenden Bauteil (1) um eine Achse (6) verschwenkbaren Teil der Vorrichtung ein Mitnehmer (2) angeordnet ist, der mindestens eine Kulissenbahn (3) aufweist und am anderen dieser beiden Teile mindestens ein Vorsprung (4) angeordnet ist, der beim Dämpfen des Bauteils (1) in die mindestens eine Kulissenbahn (3) einfährt, wobei die Kulissenbahn (3) einen Einlaufabschnitt (3a), über welchen der Vorsprung (4) in eine Richtung (69) geführt ist, die mit der der Bewegungsrichtung (44) des Bauteils (1) entgegengesetzten Richtung (68) einen Winkel (α) von weniger als 45° einschließt, und einen an den. Einlaufabschnitt (3a) anschließenden Fortsetzungsabschnitt (3b) aufweist, über welchen der Vorsprung (4) in eine Richtung (69) geführt ist, die mit der der Bewegungsrichtung (44) des Bauteils (1) entgegengesetzten Richtung (68) einen Winkel von mehr als 45° einschließt.

## Claims

1. Device for damping the movement of a movably mounted component (1), comprising a braking device which has at least one damper surface (21) which is rotatable about an axis (6) of the braking device and driven by the movement of the component (1) and, with at least one secured damper surface (22), encloses at least one gap, having a gap width in the range of 0.1 mm to 0.5 mm, containing a viscous damping medium (23) with a viscosity of more than 20,000 Pas, which brings about a braking force of the braking device, which braking force brakes the rotation of the at least one driven damper surface (21) about the axis (6) of the braking device when the at least one driven damper surface (21) is rotated in relation to the at least one secured damper surface (22), the braking force exerted by the braking device being dependent on the rotational speed of the at least one driven damper surface (21), **characterised in that** the device has an additional braking device and a coupling, in the closed state of which coupling at least one drivable additional damper surface (19) of the additional braking device is driven by the movement of the component (1) about an axis (6) of the additional braking device and rotates in relation to at least one secured additional damper surface (20) about the axis (6) of the additional braking device, the additional braking device exerting an additional braking force, and in the open state of the coupling, the at least one drivable additional damper surface (19) is decoupled from the movement of the component (1) and thus is not driven and the additional braking device is inactive, and **in that** the coupling is actuated by the braking force exerted by the braking device, the coupling being open in the event of a rotational speed of the at least one driven damper surface (21) being below a threshold value, and being closed in the event of a rotational speed of the at least one driven damper surface (21) being above the threshold value.

2. Device according to claim 1, **characterised in that** the at least one driven damper surface (21) and the at least one additional damper surface (19) which is driven in the closed state of the coupling are coaxial.

3. Device according to one of claims 1 or 2, **characterised in that** the at least one driven additional damper surface (19), with at least one secured additional damper surface (20), encloses at least one gap containing a viscous damping medium (23) which brings about a braking force of the additional braking device, which braking force brakes the rotation of the at least one driven additional damper surface (19) about the axis (6) of the additional braking device during the rotation of the at least one driven additional damper surface (19) in relation to the at least one secured additional damper surface (20), the braking force of the additional braking device being dependent on the rotational speed of the at least one driven additional damper surface (19).

4. Device according to one of claims 1 to 3, **characterised in that** the coupling has a wraparound part (31) which is flexible and which surrounds a coupling-up part (11) at least by an angle of more than 90°, preferably at least 180°, about an axis (6) of the coupling, the wraparound part (31) being connected to a damper sleeve (18) which has at least one of the damper surfaces (21, 22) of the braking device, and the wraparound part (31) and the coupling-up part (11) being rotatable in relation to each other when the rotational speed of the at least one driven damper surface (21) is below the threshold value, and being connected for rotation with each other when the rotational speed of the at least one driven damper surface (21) is above the threshold value.

5. Device according to claim 4, **characterised in that** the wraparound part (31) extends from the front connecting point (33) to the rear connecting point (34) in a first direction of rotation about the axis (6) of the coupling, **in that** the rear connecting point (34) of the wraparound part (31) is connected to the damper sleeve (18), and **in that** the movement of the component (1) to be damped is transmitted to the front connecting point (33) of the wraparound part (31), the coupling-up part (11) having the additional damper surface (19) which is driven in the closed state of the coupling, or at least one of the driven additional damper surfaces (19), and a secured damper surface which interacts with the additional damper surface being arranged on a secured inner braking part (10), or the movement of the component (1) to be damped is transmitted to the inner braking part (10), the inner braking part (10) having the driven additional damper surface, or at least one of the driven additional damper surfaces, which interacts with the additional damper surface which is arranged on the coupling-up part (11) and is secured in the closed state of the coupling, and the wraparound part (31) being secured at the front connecting point (33).

6. Device according to claim 4 or 5, **characterised in that** the axis (6) of the coupling corresponds to the axis (6) of the braking device and/or to the axis (6) of the additional braking device.

7. Device according to claim 6, **characterised in that** at least in the state of the device in which the device damps the movement of the component (1), a holding-open spring (25) acts upon the rear connecting point of the wraparound part (31) in relation to the front connecting point of the wraparound part (31) in a second direction of rotation, which is opposite the first direction of rotation, about the axis (6) of the first braking device.

8. Device according to one of claims 4 to 7, **characterised in that** the damper sleeve (18) has the driven damper surface (21), or at least one of the driven damper surfaces (21), and the driven damper surface (21), or at least one of the driven damper surfaces (21), is driven via the wraparound part, and **in that** the coupling-up part (11), or a part which is rotated thereby, has the additional damper surface which is driven in the closed state of the coupling, or at least one of the additional damper surfaces (21) which is driven in the closed state of the coupling.

9. Device according to one of claims 4 to 8, **characterised in that**, in the event of a rotational speed of the at least one driven damper surface (21) being above the threshold value, the wraparound part (31) is connected frictionally to the coupling-up part (11).

10. Device according to one of claims 1 to 9, **characterised in that** the device has an overload spring (32) arranged in the transmission path of the force which is transmitted from the component (1) to be damped to the device and drives the device.

11. Device according to claim 10, **characterised in that** the overload spring (32) is arranged in the transmission path between the component (1) and the wraparound part (31).

12. Device according to one of claims 1 to 11, **characterised in that** the component (1) to be damped is a pull-out furniture part which, when being pushed in, couples up to a catch arm (5) of the device, which catch arm is pivotable about an axis (6) which preferably coincides with the axis (6) of the braking device and/or the axis (6) of the additional braking device, from a waiting position into a normal position and, in the process, rotates the at least one driven damper surface (21) of the braking device about the axis (6) of the braking device.

13. Device according to claim 12, **characterised in that** the catch arm (5) is acted upon by a retracting spring (27), the retracting spring being tensioned to a greater extent in the waiting position of the catch arm (5) than in the normal position of the catch arm (5), and, when the catch arm (5) is adjusted from the normal position into the waiting position, a dead centre of the retracting spring (27) is overcome.

14. Device according to one of claims 1 to 13, **characterised in that** a driver (2), which has at least one slotted guide track (3), is arranged on the component (1) to be damped or on a part of the device pivotable about an axis (6) by the component (1) to be damped, and at least one projection (4) is arranged on the other of these two parts, which projection enters into the at least one slotted guide track (3) during the damping of the component (1), the slotted guide track (3) having an entry section (3a), via which the projection (4) is guided in a direction (69) which encloses an angle (α) of less than 45° with the direction (68) opposite the direction of movement (44) of the component (1), and a continuation section (3b) which adjoins the entry section (3a) and via which the projection (4) is guided in a direction (69) which encloses an angle of more than 45° with the direction (68) opposite the direction of movement (44) of the component (1).

## Revendications

1. Dispositif d'amortissement du déplacement d'un élément (1) monté mobile comprenant un dispositif de freinage qui comporte au moins une surface d'amortissement (21) mobile en rotation autour de l'axe (6) du dispositif de freinage, et entraînée par le déplacement de l'élément (1), qui définit, avec au moins une surface d'amortissement fixe (22) au moins une fente ayant une largeur située dans la plage de 0,1 mm à 0,5 mm renfermant un fluide d'amortissement visqueux (23) ayant une viscosité supérieure à 20.000 Pa, qui provoque, lors de la rotation de la surface d'amortissement entraînée (21) par rapport à la surface d'amortissement fixe (22) une force de freinage du dispositif de freinage freinant la rotation de la surface d'amortissement entraînée (21) autour de son axe (6), la force de freinage exercée par le dispositif de freinage dépendant de la vitesse de rotation de la surface d'amortissement entraînée (21),
**caractérisé en ce que**
le dispositif comprend un dispositif de freinage supplémentaire et un embrayage dans l'état fermé duquel au moins une surface d'amortissement supplémentaire (19) pouvant être entraînée du dispositif de freinage supplémentaire est entraînée par le déplacement de l'élément (1) autour d'un axe (6) du dispositif de freinage supplémentaire et tourne par rapport à au moins une surface d'amortissement supplémentaire fixe (20) autour de l'axe (6) du dispositif de freinage supplémentaire, le dispositif de freinage supplémentaire exerçant une force de freinage supplémentaire, et, dans son état ouvert, la surface d'amortissement supplémentaire entraînée (19) est découplée du déplacement de l'élément (1), et n'est pas entraînée avec celui-ci, et le dispositif de freinage supplémentaire est inactif, et l'actionnement de l'embrayage s'effectue par la force de freinage exercée par le dispositif de freinage, l'embrayage étant ouvert pour une vitesse de rotation de la surface d'amortissement entraînée (21) située au-dessous d'une valeur de seuil et étant fermée pour une vitesse de rotation de la surface d'amortissement entraînée (21) située au-dessus de la valeur de seuil.

2. Dispositif conforme à la revendication 1,
**caractérisé en ce que**
la surface d'amortissement entraînée (21) et la surface d'amortissement supplémentaire (19) entraînée lorsque l'embrayage est à l'état fermé sont coaxiales.

3. Dispositif conforme à l'une des revendications 1 et 2,
**caractérisé en ce que**
la surface d'amortissement supplémentaire entraînée (19) définit avec la surface d'amortissement supplémentaire fixe (20) au moins une fente renfermant un fluide d'amortissement visqueux (23) qui, provoque lors de la rotation de la surface d'amortissement supplémentaire entraînée (19) par rapport à la surface d'amortissement supplémentaire fixe (20) une force de freinage du dispositif de freinage supplémentaire freinant la rotation de la surface d'amortissement supplémentaire entraînée (19) autour de son axe (6), la force de freinage du dispositif d'amortissement supplémentaire dépendant de la vitesse de rotation de la surface d'amortissement supplémentaire entraînée (19).

4. Dispositif conforme à l'une des revendications 1 à 3,
**caractérisé en ce que**
l'embrayage comprend une partie d'enroulement (31) réalisée flexible qui entoure une pièce d'accouplement (11) autour de l'axe (6) de l'embrayage au moins sur un angle supérieur à 90°, de préférence d'au moins 180°, la partie d'enroulement (31) étant reliée à un manchon d'amortissement (18) qui comporte au moins l'une des surfaces d'amortissement (21, 22) du dispositif de freinage, et la pièce d'enroulement (31) et la pièce d'accouplement (11) étant mobiles en rotation l'une par rapport à l'autre pour une vitesse de rotation de la surface d'amortissement entraînée (21) située en-dessous de la valeur de seuil, et étant reliées solidairement en rotation pour une vitesse de rotation de la surface d'amortissement entraînée (21) située au-dessus de la valeur de seuil.

5. Dispositif conforme à la revendication 4,
**caractérisé en ce que**
la pièce d'enroulement (31) s'étend, de la jointure avant (33) à la jointure arrière (34) dans un premier sens de rotation autour de l'axe (6) de l'embrayage, la jointure arrière (34) de la pièce d'enroulement (31) est reliée au manchon d'amortissement (18), et la transmission du déplacement de l'élément à amortir (1) s'effectue au niveau de la jointure avant (33) de la pièce d'enroulement (31), la pièce d'accouplement (1) comprenant la surface d'amortissement supplémentaire (19) ou au moins l'une des surfaces d'amortissement supplémentaire (19) entraînées à l'état fermé de l'embrayage, et une surface d'amortissement fixe coopérant avec celle-ci étant montée sur une pièce de freinage interne fixe (10), ou la transmission du déplacement de l'élément à amortir (1) s'effectue au niveau de la pièce de freinage interne (10), la pièce de freinage interne (10) comportant la surface d'amortissement supplémentaire entraînée ou au moins l'une des surfaces d'amortissement supplémentaires entraînées qui coopère avec la surface d'amortissement supplémentaire fixe à l'état fermé de l'embrayage montée sur la pièce d'accouplement (11), et la pièce d'enroulement (31) étant fixée sur la jointure avant (33).

6. Procédé conforme à la revendication 4 ou 5,
**caractérisé en ce que**
l'axe (6) de l'embrayage coïncide avec l'axe (6) du dispositif de freinage et/ou avec l'axe (6) du dispositif de freinage supplémentaire.

7. Dispositif conforme à la revendication 6,
**caractérisé en ce que**
un ressort de maintien ouvert (25) rappelle, au moins dans l'état du dispositif dans lequel celui-ci amortit le déplacement de l'élément (1), la jointure arrière de la pièce d'enroulement (31) par rapport à la jointure avant de la pièce d'enroulement (31) dans un second sens de rotation opposé au premier sens de rotation autour de l'axe (6) du premier dispositif de freinage.

8. Dispositif conforme à l'une des revendications 4 à 7,
**caractérisé en ce que**
le manchon d'amortissement (18) comporte la surface d'amortissement entraînée (21) ou au moins l'une des surfaces d'amortissement entraînées (21), et l'entraînement de la surface d'amortissement entraînée (21) ou d'au moins l'une des surfaces d'amortissement entraînées (21) s'effectue par l'intermédiaire de la pièce d'enroulement, et la pièce d'accouplement (11) ou une pièce déplacée en rotation par celle-ci comprend la surface d'amortissement supplémentaire entraînée dans l'état fermé de l'embrayage ou au moins l'une des surfaces d'amortissement supplémentaires (21) entraînées à l'état fermé de l'embrayage.

9. Dispositif conforme à l'une des revendications 4 à 8,
**caractérisé en ce que**
la pièce d'enroulement (31) est reliée par une liaison par friction avec la pièce d'accouplement (11) dans le cas d'une vitesse de rotation de la surface d'amortissement entraînée (21) située au-dessus de la valeur de seuil.

10. Dispositif conforme à l'une des revendications 1 à 9,
**caractérisé en ce qu'**
il comprend un ressort de surcharge (32) qui est monté dans le chemin de transmission de la force d'entraînement du dispositif transmise par l'élément (1) à amortir au dispositif.

11. Dispositif conforme à la revendication 10,
**caractérisé en ce que**
le ressort de surcharge (32) est monté dans le chemin de transmission entre l'élément (1) et la pièce d'enroulement (31).

12. Dispositif conforme à l'une des revendications 1 à 11,
**caractérisé en ce que**
l'élément (1) à amortir est un élément de meuble déployable, qui, lors du repliement s'accouple sur un bras collecteur (5) du dispositif qui est mobile en pivotement autour d'un axe (6) qui coïncide de préférence avec l'axe (6) du dispositif de freinage et/ou avec l'axe (6) du dispositif de freinage supplémentaire, entre une position d'attente et une position de base, et fait ainsi tourner la surface d'amortissement entraînée (21) du dispositif de freinage tourne autour de l'axe (6) du dispositif de freinage.

13. Dispositif conforme à la revendication 12,
**caractérisé en ce que**
le bras collecteur (5) est rappelé par un ressort de rétraction (27), ce ressort de rétraction étant comprimé plus fortement dans la position d'attente du bras de préhension (5) que dans la position de base de ce bras, et, lors du déplacement du bras de préhension (5) de la position de base à la position d'attente, un point mort du ressort de rétraction (27) est surmonté.

14. Dispositif conforme à l'une des revendications 1 à 13,
**caractérisé en ce que**
sur l'élément (1) à amortir ou sur une pièce du dispositif pouvant être déplacée par pivotement autour d'un axe (6) par la pièce (1) à amortir est monté un élément d'entraînement (2) qui comporte au moins un chemin à coulisse (3), et sur l'autre de ces deux pièces est montée une saillie (4) qui, lors de l'amortissement de la pièce (1) s'introduit dans ce chemin à coulisse (3), le chemin à coulisse (3) comportant un segment d'introduction (3a) sur lequel est déplacée la saillie (4) dans une direction (69) qui définit avec la direction (68) opposée à la direction de déplacement (44) de l'élément (1) un angle α inférieur à 45° et un segment de prolongement (3b) se connectant au segment d'introduction (3a) sur lequel la saillie (4) est déplacée dans une direction (69) qui définit avec la direction (68) opposée à la direction de déplacement (44) de la pièce (1) un angle supérieur à 45°.
